# NEUE EUROPÄISCHE PATENTSCHRIFT

(11) **EP 1 028 866 B2**
(45) Veröffentlichungstag und Bekanntmachung des Hinweises auf die Entscheidung über den Einspruch: **12.07.2006**
(45) Hinweis auf die Patenterteilung: 15.01.2003
(21) Anmeldenummer: 98963410.0
(22) Anmeldetag: 04.11.1998
(51) Int. Cl.: B60M 3/04, B60L 13/00

(54) **LINEARANTRIEBSSYSTEM**
LINEAR ACTUATING SYSTEM
SYSTEME D'ENTRAINEMENT LINEAIRE

(30) Priorität: 05.11.1997 DE 19748911
(43) Veröffentlichungstag der Anmeldung: 23.08.2000
(73) Patentinhaber: Intrasys GmbH Innovative Transport-Systeme, 80339 München (DE)
(72) Erfinder: ROSNER, Peter, D-81371 München (DE)
(74) Vertreter: Ruttensperger, Bernhard
(86) Internationale Anmeldenummer: PCT/EP1998/007024
(87) Internationale Veröffentlichungsnummer: WO 1999/024284

(56) Entgegenhaltungen:
- EP-A- 0 068 328
- DE-A- 2 736 673
- DE-A- 2 852 669
- DE-A- 2 932 764
- DE-A- 3 011 980
- DE-A- 3 303 961
- DE-A- 3 808 941
- DE-A- 3 814 867
- DE-A- 4 111 853
- DE-A- 19 615 596
- DE-C- 3 917 058
- JP-A- 9 151 048
- US-A- 4 955 303
- PATENT ABSTRACTS OF JAPAN vol. 12, no. 14 (M-659), 16. Januar 1988 & JP 62 173904 A (YUKIO UOZOMI), 30. Juli 1987
- PATENT ABSTRACTS OF JAPAN vol. 95, no. 5, 30. Juni 1995 & JP 07 046715 A (TOSHIBA CORP), 14. Februar 1995
- Zeitschrift etz, Band 108, 1987, Heft 9, Seiten 378-381

## Beschreibung

Die vorliegende Erfindung betrifft ein Linearantriebssystem, umfassend eine Statoranordnung mit einer Mehrzahl von in einer Anordnungslängsrichtung aufeinanderfolgenden Statorabschnitten, wobei jeder Statorabschnitt wenigstens eine Statorwicklung aufweist, eine Energiequelle zur Versorgung der Statorabschnitte mit elektrischer Energie, eine Schalteranordnung mit jeweils einer Schaltervorrichtung für jeden Statorabschnitt, um in Abhängigkeit von einer Schaltstellung jeder der Schaltervorrichtungen wahlweise elektrische Energie von der Energiequelle zu den den Schaltvorrichtungen jeweils zugeordneten Statorabschnitten zu leiten, eine Ansteuervorrichtung zum Ansteuern jeder Schaltervorrichtung der Schalteranordnung, um zum Zuführen elektrischer Energie zu ausgewählten Statorabschnitten die diesen zugeordneten Schaltervorrichtungen in einen ersten Schaltzustand zu bringen oder/und in diesem zu halten, und die den nicht ausgewählten Statorabschnitten zugeordneten Schaltervorrichtungen in einen zweiten Schaltzustand zu bringen oder/und in diesem zu halten, wenigstens eine bezüglich der Statoranordnung in der Anordnungslängsrichtung bewegbare Läuferbaugruppe mit wenigstens einer Wechselwirkungsvorrichtung, welche durch Wechselwirkung mit einem in den Statorabschnitten erzeugten Magnetfeld eine zwischen der wenigstens einen Läuferbaugruppe und der Statoranordnung wirkende Antriebs/Brems-Kraft erzeugt.

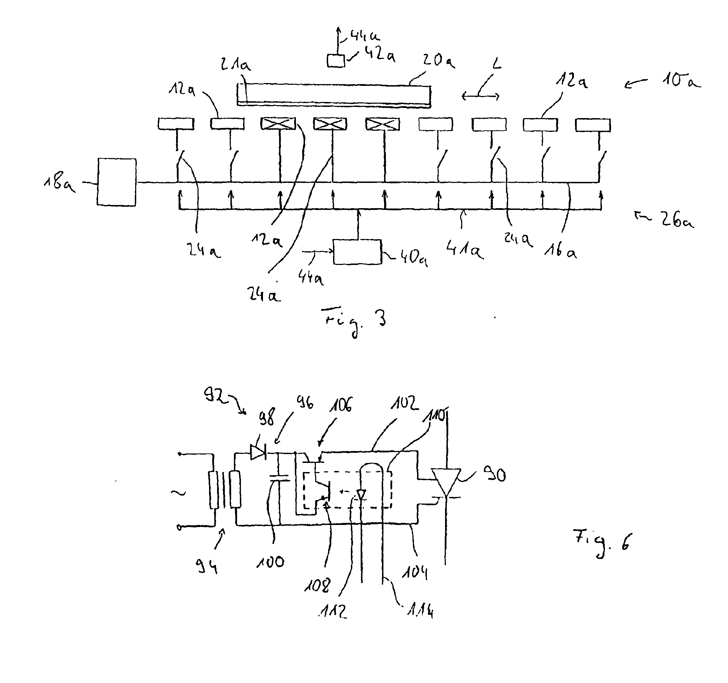

Ein derartiges, im Stand der Technik bekanntes Linearantriebssystem ist in Fig. 2a schematisch gezeigt. Das Linearantriebssystem umfaßt eine allgemein mit 10s bezeichnete Statoranordnung mit einer Mehrzahl an in einer Anordnungslängsrichtung aufeinanderfolgend angeordneten einzelnen Statorabschnitten 12s. Die einzelnen Statorabschnitte sind über diesen jeweils zugeordnete Schaltervorrichtungen 12s über eine Ansteuerleitung 16s mit einem Umrichter 18s als Energiequelle verbunden. Vom Umrichter 18s werden zur Versorgung der einzelnen Statorabschnitte 12s mit elektrischer Energie periodisch Spannungsimpulse aftemierender Polarität erzeugt. Die einzelnen Statorabschnitte umfassen Wicklungen mit einer Mehrzahl an Windungen und bei Schließen der jeweils zugeordneten Schaltervorrichtungen 24s und dementsprechender Versorgung verschiedener Statorabschnitte 12s mit elektrischer Energie wird durch die Wicklungen in den einzelnen Statorabschnitten ein Magnetfeld erzeugt. Dieses Magnetfeld wirkt auf eine Läuferbaugruppe 20s ein, welche in der Anordnungslängsrichtung L bezüglich der Statoranordnung 10s bewegbar ist. Die Läuferbaugruppe 20s weist eine Wechselwirkungsvorrichtung, beispielsweise einen Permanentmagneten, auf, welcher in Wechselwirkung mit dem in den einzelnen Statorabschnitten 12s erzeugten Magnetfeld tritt und dabei eine vortreibende Kraft für die Läuferbaugruppe 20s erzeugt.

Die einzelnen Schaltervorrichtungen 24s stehen unter Ansteuerung einer in Fig. 2a nicht dargestellten Ansteuervorrichtung. Durch Zufuhr entsprechender Ansteuersignale können die Schaltervorrichtungen 24s durch die Ansteuervorrichtung in einen geschlossenen Zustand gebracht werden, um bestimmten der Statoranordnungen 12s elektrische Energie vom Umrichter 18s zuzuführen. Dazu wird beispielsweise die Positionierung der Läuferbaugruppe 20s bezüglich der Statoranordnung 10s erfaßt und es werden lediglich diejenigen der Statorabschnitte 12s mit elektrischer Energie versorgt, welche unmittelbar der Läuferbaugruppe 20s gegenüberliegen. Dies führt zu einer beträchtlichen Stromeinsparung, da lediglich diejenigen Statorabschnitte 12s bestromt werden, welche tatsächlich zum Vortrieb beitragen. Bei dem in Fig. 2a dargestellten bekannten Linearantriebssystem besteht jedoch folgendes Problem. Man betrachte beispielsweise die beiden Statorabschnitte 12s' und 12s'', welche im momentanen Zustand wenigstens teilweise durch die Läuferbaugruppe 20s in der Anordnungslängsrichtung L überlappt sind. Von diesen Statorabschnitten 12s' und 12s" ist der Statorabschnitt 12s'vollständig von der Läuferbaugruppe 20s' überlappt, wohingegen der Statorabschnitt 12s" nur teilweise überlappt ist. Dies führt dazu, daß durch die Wechselwirkung beispielsweise des Dauermagneten in der Läuferbaugruppe 20s mit dem Statorabschnitt 12s' und dem Statorabschnitt 12s" im erstgenannten Statorabschnitt eine relativ starke Gegenspannung induziertwird, d. h. derelektrische Widerstand des Statorabschnitts 12s' ist relativ groß. Da der Statorabschnitt 12s" nur teilweise von der Läuferbaugruppe 20s überlappt ist, wird in diesem eine geringere Gegenspannung induziert, so daß der elektrische Widerstand in diesem Statorabschnitt 12s" geringer ist als im Statorabschnitt 12s'. Würden nun die beiden zugeordneten Schaltervorrichtungen 24s' und 24s" zum Erzeugen der vortreibenden Kraft geschlossen werden, so hätte dies aufgrund der Parallelschaltung der einzelnen Statorabschnitte 12s' zur Folge, daß der Strom hauptsächlich in demjenigen der Statorabschnitte fließt, welcher den geringeren elektrischen Widerstand aufweist. Dies wäre jedoch der Statorabschnitt 12s", der nur teilweise durch die Läuferbaugruppe 20s' bzw. deren Wechselwirkungsvorrichtung überlappt ist. Das heißt, es wird elektrische Energie von dem an sich zum Vortrieb wesentlich beitragenden Statorabschnitt 12s' abgezogen, was einen deutlichen Effizienzverlust zur Folge hat.

Um dies zu vermeiden, ist ein Linearantriebssystem entwickelt und benutzt worden, wie es in Fig. 2b gezeigt ist. Bei diesem nach dem sogenannten "Frog-Leap"-Verfahren arbeitenden Linearantriebssystem sind zwei Umrichter 18v, 18v' vorgesehen, welche über jeweilige Schalter 24v bzw. 24v' mit den zugeordneten Statorabschnitten 12v elektrisch verbindbar sind. Bei diesem Verfahren können unmittelbar aufeinander folgende Statorabschnitte 12v jeweils durch verschiedene Umrichter 18v bzw. 18v' bestromt werden, so daß das vorangehend angesprochene Problem des bevorzugten Stromflusses durch denjenigen Statorabschnitt, in welchem der geringere elektrische Widerstand vorhanden ist, hier vermieden werden kann. Dieses Linearantriebssystem erfordert jedoch die doppelte Anzahl an Schaltern und Umrichtern und ist somit sowohl in konstruktiver als auch in schaftungstechnischer Hinsicht äußerst aufwendig.

Es ist die Aufgabe der vorliegenden Erfindung, ein Linearantriebssystem vorzusehen, welches mit möglichst geringem Energieaufwand betrieben werden kann und welches gleichzeitig in konstruktiver und schaltungstechnischer Hinsicht einfach aufgebaut ist.

Erfindungsgemäß wird diese Aufgabe gelöst durch ein Linearantriebssystem gemäß Anspruch 1

Bei dem Linearantriebssystem gemäß dervorliegenden Erfindung sind die Statorabschnitte zur Versorgung mit elektrischer Energie von der Energiequelle in einer Serienschaltungsanordnung angeordnet und die Schaltervorrichtungen sind zu den jeweils zugeordneten Statorabschnitten schaltungsmäßig parallel angeordnet.

Mit dieser Anordnung der Statorabschnitte und der Schaltervorrichtungen kann erreicht werden, daß das ungewünschte Abziehen elektrischer Energie von denjenigen Statorabschnitten, welche wesentlich zur Erzeugung der Vortriebskraft beitragen, vermieden wird. Da die Statorabschnitte seriell geschaltet sind, fließt zwangsweise durch alle zur Erzeugung der Vortriebskraft beitragenden Statorabschnitte der gleiche Strom. Diejenigen Statorabschnitte, welche aufgrund der Tatsache, daß sie momentan nicht zur Erzeugung einer Vortriebskraft beitragen können, nicht mit elektrischer Energie zu versorgen sind, werden durch entsprechende Ansteuerung ihrer jeweils zugeordneten bzw. zu diesen parallel geschalteten Schaltervorriclitungen durch diese Schaltervorrichtungen überbrückt, so daß der elektrische Strom aufgrund des deutlich geringeren elektrischen Widerstands im wesentlichen durch die Schaltervorrichtungen fließt und nicht durch die zugeordneten Statorabschnitte. Das heißt, um die Zufuhr elektrischer Energie zu bestimmten Statorabschnitten zu verhindern, werden diese durch die Schaltervorrichtungen mit deutlich geringerem elektrischen Widerstand überbrückt. Es wird somit bei relativ einfachem konstruktivem Aufbau und bei geringem steuerungstechnischen Aufwand die Möglichkeit geschaffen, nur diejenigen Statorabschnitte mit elektrischer Energie zu versorgen, welche tatsächlich zur Erzeugung einer Vortriebskraft beitragen können.

Der Energieverbrauch kann weiter gesenkt werden und der Ansteueraufwand kann weiter reduziert werden, wenn die Statorabschnitte In wenigstens zwei Statorabschnittgruppen aufgeteilt sind, von welchen wenigstens eine Statorabschnittgruppe wenigstens zwei Statorabschnitte umfaßt, und wenn die Schalteranordnung ferner eine der wenigstens einen Statorabschnittgruppe mit zwei Statorabschnitten zugeordnete und zu den schaltungsmäßig seriell angeordneten Statorabschnitten dieser Statorabschnittgruppe und den den Statorabschnitten dieser Statorabschnittgruppe zugeordneten Schaftervorrichtungen parallel geschaltete Gruppenschaltervorrichtung umfaßt, welche durch die Steuervorrichtung ansteuerbar ist. Bei einer derartigen Anordnung können durch eine einzige sogenannte Gruppenschaftervonichtung mehrere Statorabschnitte - bzw. die diesen Statorabschnitten zugeordneten Schaltervorrichtungen überbrückt werden. Das heißt, es wird im llberbrückungsweg einerseits der elektrische Widerstand gemindert, andererseits ist zur Überbrückung einer Vielzahl an Statorabschnitten lediglich die Ansteuerung einer einzigen Gruppenschaltervorrichtung nötig.

Ferner ist bei dem erfindungsgemäßen Linearantriebssystem vorzugsweise zwischen wenigstens zwei Statorabschnitten eine Schutzschaftervorrichtung angeordnet, welche vorzugsweise durch die Ansteuervorrichtung zur Unterbrechung der seriellen Verbindung zwischen den beiden Statorabschnitten ansteuerbar ist. Eine derartige Schutzschaltervorrichtung wird im allgemeinen dann wirksam, wenn das Linearantriebssystem nicht in einem Vortriebskrafterzeugungszustand ist, sondem in einem Brernskrafterzeugungszustand. In diesem Zustand wird in den einzelnen Statorabschnitten, bzw. in deren Wicklungen, eine von der Vorbeibewegungsgeschwindigkeit der Läuferbaugruppe abhängige Spannung induziert. Die verschiedenen Komponenten eines derartigen Linearantriebssystems sind hinsichtlich ihrer Belastbarkeit derart ausgelegt, daß sie im wesentlichen bis zu einer durch die Energiequelle gelieferten Spannung, dem allgemeinen im Bereich zwischen 600 V und 700 V liegt, problemlos belastet werden können, bei deutlich höheren Spannungswerten jedoch beschädigt werden können. Eine Seriellschaltung von mehreren Statorabschnitten hätte jedoch zur Folge, daß die bei Vorbeibewegung der Läuferbaugruppe darin in induzierten Spannungen addiert werden, so daß zumindest bei relativ hohen Vorbeibewegungsgeschwindigkeiten die durch Addition erhaltene Gesamtspannung deutlich oberhalb des Auslegungsbereichs von 600 V bis 700 V liegt und die Beschädigung verschiedener Komponenten nicht mehr ausgeschlossen werden kann. Dies kann jedoch vermieden werden, wenn, wie vorangehend angesprochen, die Schutzschaltervorrichtung vorgesehen ist, welche die serielle Anordnung unterbricht, so daß auch die Spannungsaddition unterbrochen Ist. Vorzugsweise ist dabei zwischen allen einander benachbarten Statorabschnitten jeweils eine Schutzschaltervorrichtung angeordnet.

Praktischerweise ist die Energiequelle eine Dreiphasen-Energiequelle und jede der Schaftervorrichtungen und gegebenenfalls die oder jede Gruppenschaltervorrichtung umfaßt für jede Phase eine Schaltereinheit, wobei die Schaltereinheit jeder Schaltervorrichtung bzw. Gruppenschaltervorrichtung durch die Ansteuervorrichtung ansteuerbar ist.

Um die jeweiligen Schaltvorgänge möglichst schnell durchführen zu können, wird vorgeschlagen, daß jede Schaltereinheit ein Paar parallel geschalteter Thyristoren umfaßt, wobei jeder Thyristor eines Paars in seinem geschlossenen, leitenden Schalterzustand in einer Stromflußrichtung leitend ist, welche der Stromflußrichtung des anderen Thyristors des Paars entgegengesetzt ist.

Die schaltungsmäßig serielle Anordnung der einzelnen Statorabschnitte ist dadurch besonders wirksam, dass die Erstreckungslänge derwenigstens einen Wechselwirkungsvorrichtung in der Anordnungslängsrichtung wenigstens das Zweifache der Erstreckungslänge jedes Statorabschnitts in der Anordnungslängsrichtung beträgt. Als Beispiel kann hier genannt werden, daß die einzelnen Statorabschnitte eine Länge im Bereich von 2 Metern aufweisen und die Wechselwirkungsvorrichtung bzw. die Läuferbaugruppe eine Länge im Bereich von 5 Metern aufweist.

Bei dem erfindungsgemäßen Linearantriebssystem ist der erste Schaltzustand ein offener, nicht leitender Schaltzustand und der zweite Schaltzustand ist ein geschlossener, leitender Schaltzustand.

Gemäß einem weiteren Aspekt der vorliegenden Erfindung wird die eingangs genannte Aufgabe durch ein Linearantriebssystem gemäß Anuspruch 8 gelöst.

Es werden lediglich diejenigen der Statorabschnitte ausgewählt und mit Energie versorgt, welche aufgrund der nahezu vollständigen oder dervollständigen Überlappung mit der Wechseiwirkungsvorrichtung der Läuferbaugruppe einen wesentlichen Beitrag zur Vortriebskraft liefern können, so daß das eingangs angesprochene Problem bei der aus dem Stand der Technik bekannten Parallelschaltungsanordnung beseitigt werden kann, bei weicher durch Zuschaltung einer nur teilweise überlappten Statoranordnung der Strom im wesentlichen durch diese Statoranordnung mit geringerem elektrischen Widerstand fließt.

Ein derartiges Linearantriebssystem ist dadurch besonders effizient, dass die Erstreckungslänge der wenigstens einen Wechselwirkungsvorrichtung in der Anordnungslängsrichtung ein Vielfaches der Erstreckungslänge jedes Statorabschnitts in der Anordnungsiängsrichtung, vorzugsweise das Dreibis Siebenfache beträgt. Als Beispiel könnte hier genannt werden, daß die wenigstens eine Wechselwirkungsvorrichtung bzw. die Läuferbaugruppe eine Länge im Bereich von 15 Metern aufweist und jeder Statorabschnitt eine Länge im Bereich von 2 Metern aufweist.

Auch hier ist es wieder vorteilhaft, wenn die Energiequelle eine Dreiphasen-Energiequelle ist und wenn jede Schaltervorrichtung für wenigstens zwei Phasen jeweils eine Schaltereinheit umfaßt, wobei jede der Schaltereinheiten jeder Schaltervorrichtung durch die Ansteuervorrichtung ansteuerbar ist.

Um die einzelnen Schaltvorgänge wieder möglichst schnell durchführen zu können, wird vorgeschlagen, daß jede Schaltereinheit ein Paar parallel geschalteter Thyristoren umfaßt, wobei jeder Thyristor eines Paars in seinem geschlossenen Schalterzustand in einer Stromflußrichtung leitend ist, welche der Stromflußrichtung des anderen Thyristors des Paars entgegengesetzt ist. Eine weitere Verringerung des schaltungstechnischen Aufwands kann bei dieser Parallelschaftungsanordnung der einzelnen Statorabschnitte dadurch erhalten werden, daß jede Schaltervonichtung fürzwei Phasen jeweils eine Schaltereinheit umfaßt und daß bei der dritten Phase keine Schaltereinheit vorgesehen ist.

Das erfindungsgemäße Linearantriebssystem umfaßt vorzugsweise ferner bei wenigstens einem, vorzugsweise jedoch bei allen Statorabschnitten eine Bremskraft-Erzeugungsschaltung.

Diese Bremskraft-Erzeugungsschaltung kann beispielsweise parallel zu dem jeweils zugeordneten Statorabschnitt eine Serienschaltung aus einer Bremsschaltervorrichtung, wenigstens einem Widerstand und wenigstens einem Kondensator umfassen. Da durch die Bremskraft-Erzeugungsschaltung auch eine Sicherheitsfunktion zu erfüllen ist, d. h. beispielsweise bei Übergang in einen undefinierten Beschaltungszustand oder bei Stromausfall dafür Sorge getragen werden muß, daß die Läuferbaugruppe sich nicht in ungebremster Art und Weise bezüglich der Statoranordnung bewegt, wird vorgeschlagen, daß die Bremsschaltervorrichtung eine normalerweise offene Sicherheitsschaltervorrichtung umfaßt, welche bei Unterschreiten eines Schwellenlaststroms und/oder einer Schwellenlastspannung in einen geschlossenen, leitenden Zustand schaltet.

Alternativ oder zusätzlich ist es jedoch auch möglich, daß die Bremsschaltervorrichtung durch die Ansteuervorrichtung ansteuerbar ist, um beispielsweise während eines normalen Betriebszustands in gezielter Art und Weise in bestimmten Bereichen eine Abbremsung der Läuferbaugruppe herbeiführen zu können.

Das erfindungsgemäße Linearantriebssystem umfaßt vorzugsweise ferner eine Positionserfassungseinrichtung zum Erfassen einer Relativpositionierung der Läuferbaugruppe bezüglich der Statoranordnung und zum Erzeugen eines die Relativpositionierung wiedergebenden Positionssignals für die Ansteuervorrichtung, wobei die Ansteuervorrichtung dazu ausgebildet ist, in Abhängigkeit von dem Positionssignal bestimmte der Statorabschnitte zur Versorgung mit elektrischer Energie auszuwählen und die diesen ausgewählten Statorabschnitten zugeordneten Schaltervorrichtungen und gegebenenfalls Gruppenschaltervorrichtungen in den ersten Schaltzustand zu stellen.

Die Energiequelle ist vorzugsweise ein Umrichter.

Bei diesem Aspekt dervorliegenden Erfindung ist der erste Schaltzustand ein geschlossener, leitender Schaitzustand und der zweite Schaitzustand ist ein offener, nicht leitender Schaltzustand.

Gemäß einem weiteren Aspekt betrifft die vorliegende Erfindung ein Verfahren gemaß Anspruch 20.

Bei Linearantriebssystemen, in welchen verschiedene Statorabschnitte wahlweise zu- und abschaltbar sind, um dadurch elektrische Energie einzusparen, ist es wichtig, daß die Schaltvorgänge zum Zu-und Abschalten der Statorabschnitte in sehr kurzer Zeit vorgenommen werden. Es werden daher in den Schalteranordnungen, durch welche die Statorabschnitte zu-und abgeschaltet werden, im allgemeinen Thyristoren verwendet, da diese sehr kurze Schaltzeiten aufweisen und bei hohen Lastströmen betrieben werden können. Thyristoren werden derart betrieben, daß sie bei Anliegen einer Lastspannung durch einen Ansteuerimpuls, d. h. Ansteuerstromimpuls, geschlossen werden, d. h. in einen leitenden Zustand gebracht werden. Ist das Schließen einmal vorgenommen, so bleibt der Thyristor in seinem geschlossenen leitenden Zustand, bis der über den Thyristor hinweg fließende Laststrom einen vorbestimmten Schwellenwert unterschreitet. Bei Linearantriebssystemen besteht jedoch das Problem, daß die an den Thyristoren anliegende Lastspannung oder der fließende Laststrom oftmals undefinierte Zustände annehmen bzw. daß dann, wenn an den Thyristor ein Ansteuersignalimpuls zum Schließen desselben angelegtwird, der durch den Thyristor hindurch fließende Laststrom nicht mit ausreichender Schnelligkeit ansteigt. Dies hat zur Folge, daß der Ansteuerimpuls bereits wieder abgefallen ist, bevor der über den Thyristor hinweg fließende Laststrom den Schwellenwert überschritten hat. Dies kann zu dem Problem führen, daß trotz Zufuhr von Ansteuersignalimpulsen verschiedene der Schaltervorrichtungen der Schalteranordnung nicht in den geschlossenen, leitenden Zustand gebracht werden, so daß auch der zugeordnete Statorabschnitt nicht in den gewünschten Betriebszustand gebracht werden kann.

Um dieses Problem zu beseitigen, schlägt die vorliegende Erfindung gemäß einem weiteren Aspekt vor, daß die Schalteranordnung wenigstens einen Thyristor umfaßt, welcher zum Zuführen eines Ansteuersignals von der Ansteuervorrichtung in einen geschlossenen, leitenden Zustand bringbar ist. Die Ansteuervorrichtung umfaßt dem wenigstens einen Thyristor zugeordnet eine Gleichstrom-Schließsignalerzeugungsvorrichtung, um den wenigstens einen Thyristor im wesentlichen wärend der gesamten Zeitdauer, während welcher dieser im geschlossenen, leitenden Zustand zu erhlaten ist, ein Gleichstrom-Schließsignal zuzuführen.

Es ist somit möglich, unabhängig von der Anstiegszeit des Laststroms oder von den bestimmten Betriebszuständen des Linearantriebssystems den Thyristor für eine definierte Zeitdauer in den leitenden Zustand zu bringen, ohne daß die Gefahr besteht, daß der zugeordnete Statorabschnitt nicht in den gewünschten Betriebszustand gebracht werden kann.

Die Gleichstrom-Schließsignalerzeugungsvorrichtung kann eine mit dem wenigstens einen Thyristor über Schaltermittel verbundene Gleichstromqueile umfassen, wobei die Schaltermittel durch Zufuhr eines Schaltsignals in einen geschlossenen, leitenden Zustand bringbar sind.

Beispielsweise kann die Gleichstromquelle eine Batterie, einen Akkumulator, eine Wechselstromquelle mit nachgeschaltetem Gleichrichter oder dergleichen umfassen.

Es wird vorgeschlagen, daß die Schaltermittel direkt oder indirekt durch ein optisches Schaltsignal in den geschlossenen, leitenden Zustand bringbar sind.

Gemäß einem weiteren Aspekt der vorliegenden Erfindung wird vorgeschlagen, daß eine Ansteuervorrichtung wenigstens einen Thyristor umfaßt, welcher ein schneller Thyristor ist.

Aufgrund der Verwendung schneller Thyristoren kann das folgende im Stand der Technik aufgetretene Problem vermieden werden. Es ist häufig vorgekommen, daß nach dem Nulldurchgang eines von einem Umrichter als Energiequelle gelieferten Spannungsimpulssignals und vor dem Auftreten des nächsten Spannungsimpulses die als Schalter verwendeten Thyristoren zwar zunächst in den offenen, nicht leitenden Zustand übergegangen sind, jedoch bei Auftreten des nächsten Spannungsimpulses wieder zugeschaltet haben, d. h. wieder in den leitenden Zustand gegangen sind, obgleich kein Ansteuersignal angelegen hat. Dies kann möglicherweise dadurch begründet sein, daß aufgrund der relativ schnellen Abfolge der einzelnen Spannungsimpulse vom Umrichter eine vollständige Ladungsträgerverarmung im Thyristor noch nicht aufgetreten ist, d. h. die vorhandene Raumladung bei Auftreten des nächsten Spannungsimpulses noch ausreichend war, um den Thyristor in einen leitenden Zustand zu schalten.

Dieses Problem kann bei Verwendung schneller Thyristoren vermieden werden.

Dazu weist der schnelle Thyristor eine Freiwerdezeit im Bereich von 30 % bis 80 %, vorzugsweise ca. 50 % des Impulsabstands von an den Thyristor angelegten Lastimpulsen auf.

Beispielsweise kann die Freiwerdezeit des schnellen Thyristors im Bereich von 30 µs bis 100 µs liegen.

Der Impulsabstand kann derzeitliche Abstand zwischen zwei unmittelbar aufeinander folgenden Lastimpulsen gleicher Polarität sein oder kann der zeitliche Abstand zwischen zwei unmittelbaraufeinanderfolgenden Lastimpulsen unterschiedlicher Polarität sein.

Bei einem Linearantriebssystem, bei dem mehrere Statorabschnitte durch entsprechende Ansteuerung einer jeweils zugeordneten Schaltervorrichtung wahlweise mit elektrischer Energie versorgbar sind, ist es aus Sicherheitsaspekten wichtig, die jeweiligen Schaltervorrichtungen hinsichtlich ihrer Funktionsfähigkeit zu überprüfen. Wird festgestellt, daß eine Schaltervorrichtung nicht in der erwarteten Art und Weise arbeitet, so muß diese durch eine andere Schaltervorrichtung ersetzt werden, um somit eine sichere Funktionsweise des gesamten Systems zu gewährleisten.

Bei dem erfindungsgemäßen System kann daher ein Verfahren zur Funktionsüberprüfung einer Schalteranordnung durchgeführt werden, wobei die Schalteranordnung wenigstens eine durch ein Ansteuersignal von einer Ansteuervorrichtung in einen geschlossenen Zustand bringbare Schaltervorrichtung, vorzugsweise Thyristorschaltervorrichtung, umfaßt. Das Verfahren umfaßt die Schritte:
a) Feststellen, ob ein Ansteuersignal zum Schalten der Schaltervorrichtung in einen geschlossenen, leitenden Zustand an der Schaltervorrichtung anliegt,
b) Feststellen, ob ein Spannungsabfall über die Schaltervorrichtung hinweg größer ist als eine vorbestimmte Schwellenspannung,
c) in Abhängigkeit von den Feststellungsergebnissen der Schritte a) und b) bestimmen, ob ein Fehler in der wenigstens einen Schaltervorrichtung aufgetreten ist.

Es kann somit beispielsweise festgestellt werden, daß kein Fehler der Schaltervorrichtung vorliegt, wenn im Schritt a) festgestellt wird, daß kein Ansteuersignal anliegt, und im Schritt b) festgestellt wird, daß der Spannungsabfall größer als die Schwellenspannung ist. Das heißt, in einem derartigen Zustand, in dem kein Ansteuersignal vorliegt, d. h. die Schaltervorrichtung in einem offenen, nicht leitenden Zustand sein sollte, kann aufgrund des relativ großen Spannungsabfalls festgestellt werden, daß durch die Schaltervorrichtung hindurch kein Strom fließt.

Weiter kann festgestellt werden, daß ein Fehler aufgetreten ist, wenn im Schritt a) festgestellt wird, daß kein Ansteuersignal anliegt, und im Schritt b) festgestellt wird, daß der Spannungsabfall kleiner als die Schwellenspannung ist.

In dem Falle, daß bestimmt wird, daß ein derartiger Fehler in der Schaltvorrichtung aufgetreten ist, ist es vorteilhaft abzuwarten, bis das Ansteuersignal sich zweimal geändert hat. Das heißt, es wird abgewartet, bis das Ansteuersignal beispielsweise von einem Hochzustand auf einen Niederzustand und dann wieder auf einen Hochzustand gegangen ist, so daß dementsprechend auch der Ansteuerzustand der Schaltervorrichtung sich beispielsweise von einem geschlossenen, leitenden Zustand, zu einem offenen, nicht leitenden Zustand und wieder auf einen geschlossenen, leitenden Zustand ändern hätte sollen. Ist diese zweimalige Änderung des Ansteuersignals festgestellt worden und ist der Spannungsabfall immernoch kleinerals die Schwellenspannung, so kann mit relativ großer Sicherheit festgestellt werden, daß die vorangehend vorgenommene Fehlerbestimmung nicht auf einem einmal fehlerhaft ausgegebenen Signal beruht hat, sondem daß tatsächlich ein Fehler der Schaltervorrichtung aufgetreten ist.

Weiter kann bestimmt werden, daß kein Fehler in der Schaltervorrichtung aufgetreten ist, wenn im Schritt a) bestimmt wird, daß ein Ansteuersignal anliegt und wenn im Schritt b) bestimmt wird, daß der Spannungsabfall kleiner als die Schwellenspannung ist. Das heißt, dies ist ein Zustand, in welchem dann, wenn die Schaltervorrichtung leitend sein sollte, tatsächlich ein Strom über diese hinweg fließt, was beispielsweise durch den geringen Spannungsabfall erkennbar ist.

Das Auftreten eines Fehlerzustands kann dann festgestellt werden, wenn im Schritt a) bestimmt wird, daß ein Ansteuersignal anliegt und im Schritt b) bestimmt wird, daß der Spannungsabfall größer als die Schwellenspannung ist. Das heißt, dies ist ein Zustand, in dem die Schaltervorrichtung trotz der Tatsache, daß sie leitend sein sollte, in einem nicht leitenden, offenen Zustand ist.

Auch hier ist es wieder vorteilhaft, abzuwarten, bis das Ansteuersignal sich zweimal verändert hat, d. h. wieder der gleiche Ansteuerzustand vorliegt, um das einmalige Auftreten einer Fehleranzeige dann noch einmal zu verifizieren.

Wenn die wenigstens eine Schaltervorrichtung eine Mehrzahl zueinander parallel geschalteter Schaltereinheiten umfaßt, vorzugsweise jeweils eine Schaltereinheit zu jeder Phase eines Dreiphasen-Energieversorgungssystems, dann wird die Funktionsüberprüfung vorteilhafterweise bei jeder Schaltereinheit der wenigstens einen Schaltervorrichtung vorgenommen.

Wenn in einem derartigen Falle bei einer Funktionsüberprüfung die Überprüfungen der verschiedenen Schaltereinheiten zu untereinander uneinheitlichen Ergebnissen führen, d. h., wird bei einer Schaltereinheit bestimmt, daß im gleichen Ansteuersignalzustand ein hoher Spannungsabfall vorliegt, wohingegen bei der anderen Schaltereinheit bestimmt wird, daß ein niederer Spannungsabfall vorliegt, dann ist es aus Sicherheitsgründen vorteilhaft, in jedem Falle zu bestimmen, daß ein Fehler aufgetreten ist.

Die erfindungsgemäße Funktionsüberprüfung wird vorteilhafterweise wiederholt, vorzugsweise periodisch durchgeführt. Das Auftreten eines Fehlers wird nur dann definitiv bestimmt, wenn wenigstens zwei unmittelbar aufeinander folgende Funktionsüberprüfungen zu dem Ergebnis geführt haben, daß ein Fehler in der wenigstens einen Schaltervorrichtung aufgetreten ist. Es kann somit vermieden werden, daß beispielsweise aufgrund von Störsignalen erzeugte fehlerhafte Fehlerbestimmungen dazu führen, daß das Linearantriebssystem abgeschaltet werden muß oder daß eine Schaltervorrichtung ausgetauscht wird.

Die vorliegende Erfindung wird nachfolgend mit Bezug auf die beiliegenden Zeichnungen anhand bevorzugter Ausgestaftungsformen detailliert beschrieben. Es zeigt:
- Fig. 1: ein Anordnungsdiagramm eines erfindungsgemäßen Linearantriebssystems mit serieller Anordnung einzelner Statorabschnitte;
- Fig. 2a: ein Linearantriebssystem des Standes der Technik mit schaltungsmäßig paralleler Anordnung der einzelnen Statorabschnitte;
- Fig. 2b: ein weiteres Linearantriebssystem des Standes der Technik mit schaltungsmäßig paralleler Anordnung der einzelnen Statorabschnitte, welches nach dem "Frog-Leap"-Verfahren arbeitet,
- Fig. 3: ein erfindungsgemäß aufgebautes Linearantriebssystem mit schaltungsmäßig paralleler Anordnung der einzelnen Statorabschnitte;
- Fig. 4: einen Aufbau einer Schaltervorrichtung für das erfindungsgemäße Linearantriebssystem bei schaltungsmäßig serieller Anordnung der einzelnen Statorabschnitte;
- Fig. 5: eine erfindungsgemäße Schaltervorrichtung zur Verwendung bei einem Linearantriebssystem mit schaltungsmäßig paralleler Anordnung der einzelnen Statorabschnitte;
- Fig. 6: ein Schaltungsdiagramm einer Schaltung, mit welcher Gleichstrom-Schließschaltsignale für einen Thyristor erzeugt werden;
- Fig. 7a, 7b: ein Flußdiagramm eines Verfahrens, mit welchem ein Linearantriebssystem hinsichtlich seiner Schalteranordnungen diagnostiziert werden kann.

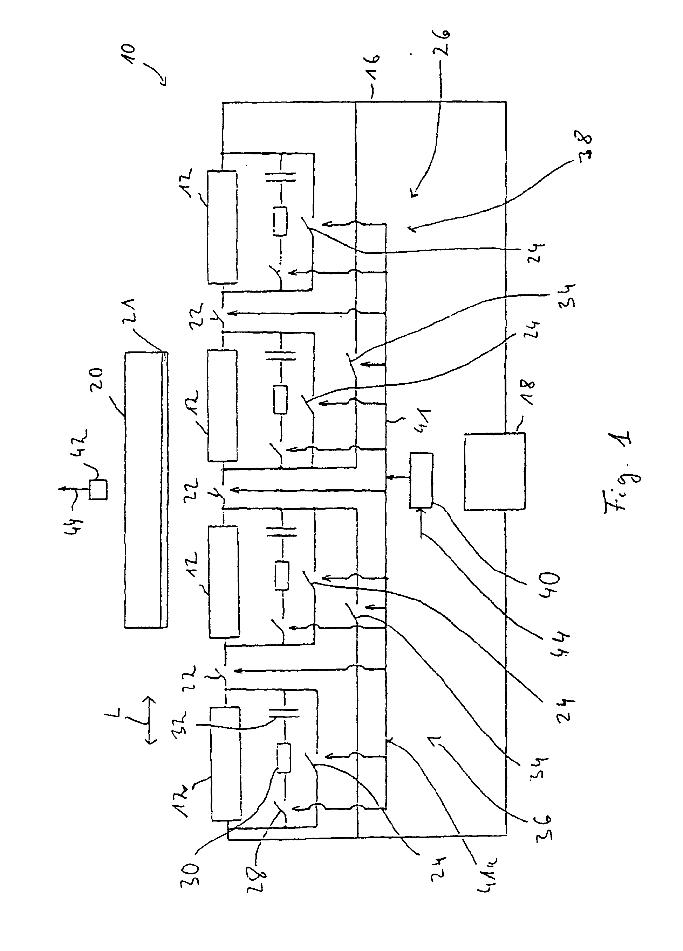

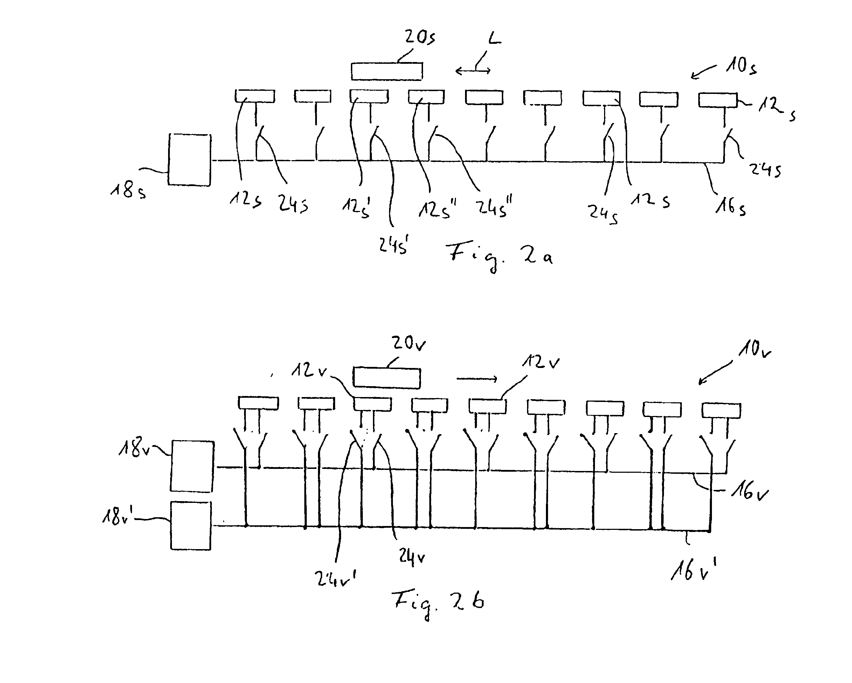

Die Fig. 1 zeigt ein Linearantriebssystem, bei dem eine mit 10 bezeichnete Statoranordnung eine Mehrzahl (wenigstens zwei) von in einer Anordnungslängsrichtung L aufeinanderfolgend angeordneten Statorabschnitten 12 umfaßt. Die einzelnen Statorabschnitte 12 weisen jeweils zumindest eine in den Figuren nicht gezeigte Wicklungauf. Die Statorabschnitte 12sind,wie in Fig. 1 erkennbar, schaltungsmäßig seriell angeordnet. Das heißt, die Statorabschnitte 12 werden von einer Energiequelle in Form eines Umrichters 18 über eine Leitung 16 seriell mit elektrischer Energie versorgt.

Zwischen den einzelnen Statorabschnitten 12 und bei Bedarf auch folgend auf die in Anordnungslängsrichtung L letzten Statorabschnitte 12 sind einzelne Schutzschaltervorrichtungen 22, sogenannte Schütze 22, angeordnet, welche in einem normalen, eine Vortriebskraft für eine Läuferbaugruppe 20 erzeugenden Betriebszustand des Linearantriebssystems in einem geschlossenen Zustand sind. Zur Erzeugung dieser Vortriebskraft weist die Läuferbaugruppe 20 beispielsweise als Wechselwirkungsvorrichtung 21 einen Permamentmagneten oder mehrere Permanentmagnete auf, welche in Wechselwirkung mit dem in den einzelnen Statorabschnitten 12 erzeugten Magnetfeld treten. Alternativ kann auch die Läuferbaugruppe 20 durch Bestromung und durch das Vorsehen jeweiliger Spulen mit Wicklungen ein Wechselwirkungsmagnetfeld erzeugen oder kann ein Wirbelstromerzeugungselement aufweisen, in welchem ein Wirbefstrom erzeugt wird, dessen Magnetfeld wiederum in Wechselwirkung mit dem durch die Statorabschnitte 12 erzeugten Magnetfeld tritt. All diese als Synchron- bzw. Asynchronantriebssysteme bezeichneten Anordnungen sind im Stand der Technik bekannt.

Man erkennt in Fig. 1 ferner, daß zu jedem Statorabschnitt 12 parallel geschaltet eine Schaltervorrichtung 24 vorgesehen ist, welche ebenso wie die vorangehend angesprochenen Schütze 22 Teil einer Schalteranordnung 26 sind. Parallel zu den jeweiligen Schaltervorrichtungen 24, und somit auch parallel zu den einzelnen Statorabschnitten 12 ist jeweils ein aus einer Bremsschaltervorrichtung 28, einem elektrischen Widerstand 30 und einem Kondensator 32 gebildeter Leitungsweg vorgesehen.

Ferner sind die einzelnen Statorabschnitte 12 der Statoranordnung 10 in einzelne Gruppen 36, 38 aufgeteilt. So ist für die beiden in Fig. 1 links erkennbaren Statorabschnitte 12 ein Gruppenschalter 34 vorgesehen, und für die beiden in der Darstellung der Fig. 1 rechts erkennbaren Statorabschnitte 12 ist ebenfalls ein Gruppenschalter 34 vorgesehen. Die Gruppenschalter 34 sind jeweils parallel zu allen in einer Gruppe 36, 38 enthaltenen Statorabschnitten 12 angeordnet und somit auch parallel zu allen in den einzelnen Gruppen 36, 38 vorgesehenen Schaltervorrichtungen 24.

Obgleich in Fig. 1 lediglich vier einzelne Statorabschnitte 12 gezeigt sind, die beispielsweise in zwei Gruppen 36 bzw. 38 unterteilt sind, ist es selbstverständlich, daß das erfindungsgemäße Linearantriebssystem jede beliebige andere Anzahl an Statorabschnitten aufweisen kann, die beliebig zu verschiedenen Statorabschnittgruppen zusammengefaßtwerden können.

Alle vorangehend angesprochenen Schalter bzw. Schaltervorrichtungen, d. h. die Schütze 22, die Schaltervorrichtungen 24, die Bremsschaltervorrichtungen 28 und die Gruppenschaltervorrichtungen 34 stehen bei der Ausgestaltungsform gemäß Fig. 1 unter der Steuerung einer Ansteuervorrichtung 40, welche, wie in Fig. 1 schematisch angedeutet, über jeweilige Ansteuersignalleitungen 41 in Ansteuerverbindung mit den jeweiligen Schalter bzw. Schaltervorrichtungen steht, um durch Zufuhr von Ansteueroder Schaltsignalen die jeweiligen Schaltervorrichtungen in ihre geschlossenen, leitenden Zustände zu bringen.

Ferner ist eine andeutungsweise erkennbare Positionserfassungseinrichtung 42 vorgesehen, welche beispielsweise eine Vielzahl an Positionssensoren umfassen kann, um die Relativpositionierung der Läuferbaugruppe 20 bezüglich der Statoranordnung 10 zu erfassen. Wie durch Pfeile 44 angedeutet, gibt die Positionierungserfassungseinrichtung 42 ein der Relativpositionierung zwischen Läuferbaugruppe 20 und Statoranordnung 10 entsprechendes Positionssignal in die Ansteuervorrichtung 40 ein.

Im folgenden wird die Funktionsweise des in Fig. 1 gezeigten Linearantriebssystems beschrieben.

Man erkennt, daß die Läuferbaugruppe 20 in der Anordnungslängsrichtung mit mehreren der Statorabschnitte 12 überlappt ist. Insbesondere sind dies der rechte Statorabschnitt 12 der Statorabschnittgruppe 36 und der linke Statorabschnitt 12 der Statorabschnittgruppe 38. Das heißt, um durch Wechselwirkung des in den jeweiligen Statorabschnittgruppen 36, 38 erzeugten Magnetfelds mit der entsprechenden Wechselwirkungsvorrichtung 21 in der Läuferbaugruppe 20 die gewünschte Vortriebskraft zu erzeugen, werden jeweils diejenigen Statorabschnitte 12 mit elektrischer Energie versorgt, welche sich momentan, d. h. im momentanen Positionierungszustand, mit der Wechselwirkungsvorrichtung 21 der Läuferbaugruppe 20 überlappen. Im Bewegungszustand der Fig. 1 sind dies die eben angesprochenen Statorabschnitte. Das heißt, in dem Momentanzustand, welcher in Fig. 1 gezeigt ist, werden durch die Steuervorrichtung 40 die folgenden Schalter bzw. Schaltervorrichtungen in einen geschlossenen, leitenden Zustand gebracht:
- Da der momentane Betriebszustand ein Antriebszustand ist, werden alle Schütze 22 in den geschlossenen, leitenden Zustand geschaltet;
- Da keine der Statorabschnittgruppen 36, 38 überbrückt werden soll, werden die beiden den Statorabschnittgruppen 36, 38 zugeordneten Gruppenschaltervorrichtungen 34 in einem geöffneten, nicht leitenden Zustand gehalten;
- Die Schaltervorrichtung 24 des in der Darstellung der Fig. 1 am weitesten links liegenden Statorabschnitts 12 wird in einen geschlossenen, leitenden Zustand gebracht;
- Die Schaltervorrichtung 24 des in der Darstellung der Fig. 1 am weitesten rechts liegenden Statorabschnitts 12 wird in einen geschlossenen, leitenden Zustand gebracht.

Alle anderen Schalter bzw. Schaltervorrichtungen, d. h. alle Bremsschaltervorrichtungen 28 und die beiden Schaltervorrichtungen 24 der in der Darstellung der Fig. 1 in der Mitte liegenden Statorabschnitte 12 werden in einem offenen, nicht leitenden Zustand gehalten. Es wird noch einmal darauf hingewiesen, daß die Auswahl derjeweiligen Schalter, welche in einen geschlossenen, leitenden Zustand zu bringen sind, in Abhängigkeit von dem der Steuervorrichtung 40 zugeführten Positionssignal vorgenommen wird.

In dem vorangehend beschriebenen Beschaltungszustand fließt der Strom also beispielsweise von dem Umrichter 18 zu dem in Fig. 1 links dargestellten Statorabschnitt 12, fließt jedoch nicht durch den Statorabschnitt 12 hindurch, sondem durch die zu diesem parallel angeordnete und im geschlossenen, leitenden Zustand gehaltene Schaltervorrichtung 24, da diese einen deutlich geringeren elektrischen Widerstand aufweist, als der Statorabschnitt 12. Das heißt, es wird in diesem Beschaltungszustand dem Statorabschnitt 12 keine oder im wesentlichen keine elektrische Energie zugeführt. Der Strom fließt durch diese Schaltervorrichtung 24 und den darauf folgenden Schütz 22 zu dem zweiten Statorabschnitt 12 von links und fließt, da sowohl der zugeordnete Bremsschalter 28 als auch die zugeordnete Schaltervorrichtung 24 offen sind, durch diesen Statorabschnitt 12 hindurch zu dem nächsten Schütz 22. In entsprechender Weise fließt der Strom durch den nächsten Statorabschnitt 12 hindurch, da auch hier die beiden zugeordneten Schaltervorrichtungen Bremsschaltervorrichtung 28 und Schaltervorrichtung 24 offen sind. Der Strom fließt dann über den nächsten Schütz 22 weiter zum nächsten Statorabschnitt 12, welcher jedoch wieder durch die geschlossene Schaltervorrichtung 24 überbrückt ist, so daß auch hier der Strom im wesentlichen nicht durch den Statorabschnitt 12, sondern über die Schaltervorrichtung 24 und zurück zum Umrichter 18 fließt. Es werden also lediglich die Statorabschnitte 12 mit elektrischer Energie versorgt, die dem Läufer 20 gegenüberliegen, so daß in diesen Statorabschnitten 12 ein Magnetfeld zur Erzeugung einer Vortriebskraft erzeugt wird. In den anderen Statorabschnitten wird im wesentlichen keine Leistung verbraucht, was aus einem ökonomischen Betrachtungspunkt äußerst vorteilhaft ist. Selbst in einem Zustand, in dem einer der Statorabschnitte 12, in weichen ein Magnetfeld erzeugt wird, d. h. welche mit elektrischer Energie versorgt sind, vollständig mit der Wechselwirkungsvorrichtung 21 der Läuferbaugruppe 20 überlappt ist und der andere nur teilweise überlappt ist, fließt durch beide mit elektrischer Energie versorgten Statorabschnitten 12 der gleiche elektrische Strom, so daß in beiden in geeigneter Weise ein Magnetfeld zur Erzeugung einer Vortriebskraft erzeugt wird.

Bewegt sich in der Darstellung der Fig. 1 die Läuferbaugruppe 20 beispielsweise in Anordnungslängsrichtung L nach rechts und kommt sie dabei auch zur Überlappung mit dem am weitesten rechts dargestellten Statorabschnitt 12, so wird auch die diesem zugeordnete Schaltervorrichtung 24 wieder in den offenen, nicht leitenden Zustand geschaltet, so daß nunmehr auch in diesem Statorabschnitt 12 ein Magnetfeld erzeugt wird. Tritt dabei die Läuferbaugruppe 20 aus ihrer Überlappung mit dem zweiten Statorabschnitt 12 von links heraus, so daß dieser nicht meht zur Erzeugung einer Vortriebskraft beitragen kann, so wird dann einerseits die diesem Stator zugeordnete Schaltervorrichtung 24 wieder in ihren geschlossenen, leitenden Zustand gebracht, andererseits wird die dieser Statorabschnittgruppe 36 zugeordnete Gruppenschaltervorrichtung 34 in ihren geschlossenen, leitenden Zustand gebracht, so daß die gesamte Statorgruppe 36 durch die Gruppenschaltervorrichtung 34 unter weiterer Verringerung des elektrischen Widerstands überbrückt ist.

Entsprechendes gilt bei Bewegung in umgekehrter Richtung für die Statorabschnittgruppe 38.

Befindet sich die Läuferbaugruppe 20 in einem Bremszustand, beispielsweise bei Bergabfahrt oder dergleichen, so werden durch die Ansteuervorrichtung 24 zumindest all diejenigen Schütze 22 ihren offenen, nicht leitenden Zustand gebracht, die in dem momentanen Positionierungsbereich der Läuferbaugruppe 20 sind. Soll eine verstärkte Bremswirkung hervorgerufen werden, so werden durch die Ansteuerung der Steuervorrichtung 40 zumindest wieder die im Positionierungsbereich der Läuferbaugruppe 20 liegenden Bremsschaltervorrichtungen 28 in ihren geschlossenen, leitenden Zustand geschaltet.

Da in diesem Zustand die einzelnen Statorabschnitte 12 voneinander getrennt sind, führt die durch die Vorbeibewegung der Läuferbaugruppe 20 in diesen induzierte Spannung nicht aufgrund der durch serielle Anordnung dann entstehenden Spannungsaddition zu einem übermäßigen Spannungsanstieg, welcher Komponenten im Antriebssystem beschädigen könnte. Es ist hier zu berücksichtigen, daß die verschiedenen Komponenten im allgemeinen auf eine Spannung im Bereich von 600 V bis 700 V ausgelegt sind. Übersteigen die beim Bremsen erzeugten Spannungsspitzen diese Normalbetriebsspannung erheblich, so wäre eine Beschädigung verschiedener Komponenten nicht auszuschlie-βen. Da jedoch sämtliche Statorabschnitte 12 voneinander getrennt sind und da bei serieller Anordnung der einzelnen Statorabschnitte diese Statorabschnitte mit Spulen versehen sind, welche weniger Wicklungen aufweisen, als entsprechende Statorabschnitte in Parallelschaltung, kann das Auftreten von Spannungsspitzen zuverlässig verhindert werden.

Das Schließen der Bremsschaltervorrichtungen 28, welches von einem gleichzeitigen Öffnen der jeweils zugeordneten Schaltervorrichtungen 24 begleitet ist, führt dazu, daß durch die einzelnen Statorabschnitte 12, den Widerstand 30 und den Kondensator 32 ein Resonanzschwingkreis geschaffen ist, bei welchem aufgrund der Dimensionierung der einzelnen Schwingkreiskomponenten eine Resonanzkurve vorliegt, die für eine bestimmte Vorbeibewegungsgeschwindigkeit der Läuferbaugruppe 20 an dem jeweiligen Statorabschnitt zu einer maximalen Bremskraft beiträgt. Diese Resonanzkurve hat also bei einer bestimmten Vorbeibewegungsgeschwindigkeit einen Maximalwert und fällt dann zu höheren Geschwindigkeiten hin mit 1/v (Geschwindigkeit) ab. Das heißt, nimmt die Geschwindigkeit der Läuferbaugruppe zu, so würde die Bremskraft abnehmen. Dies ist ein ungewünschter Effekt, der jedoch dadurch beseitigt werden kann, daß durch die Vergrößerung des Widerstandswertes des Widerstands 30 das Maximum der Resonanzkurve zu größeren Geschwindigkeitswerten hin verlagert wird. Das heißt, ist bekannt, mit welcher Geschwindigkeit sich die Läuferbaugruppe 20 bezüglich der jeweiligen Statorabschnitte bewegen wird, so kann in jedem Statorabschnitt durch geeignete Auswahl des Widerstandswertes des zugeordneten Widerstands 30 die für den definierten Geschwindigkeitsbereich optimale Bremskraft eingestellt werden.

Weitere Details zur Funktionsweise bzw. zum Aufbau derartiger Bremskrafterzeugungsvorrichtungen sind in der deutschen Offenlegungsschrift DE 41 11 853 A1 der Anmelderin der vorliegenden Anmeldung offenbart.

Es wird darauf hingewiesen, daß die Bremsschaltervorrichtungen 28 auch derart ausgebildet sein können, daß sie zusätzlich oder anstelle zur Ansteuerbarkeit durch die Ansteuervorrichtung 40 automatisch von einem offenen, nicht leitenden Schalterzustand in einen geschlossenen, leitenden Zustand übergehen, wenn der Laststrom einen bestimmten Schwellenwert unterschreitet, d. h. wenn beispielsweise der Umrichter 18 ausfällt. Dies bedeutet, in diesem Zustand würde automatisch eine Bremsfunktion eingeschaltet werden, um eine ungebremste Bewegung der Läuferbaugruppe zu vermeiden. Auch dies ist dann begleitet von einem automatischen Öffnen der zugeordneten Schaltervorrichtung 24.

Mit dem in Fig. 1 dargestellten Linearantriebssystem ist bei relativ geringem schaltungstechnischem Aufwand ein äußerst energiesparender Betrieb möglich. Dieses Linearantriebssystem mit Serienschaltung der einzelnen Statorabschnitte ist besonders geeignet, wenn die Länge der Läuferbaugruppe 20, d. h. deren Wechselwirkungsvorrichtung2l, in der Größenordnung der Länge der einzelnen Statorabschnitte liegt bzw. nicht wesentlich länger ist. Das heißt, die Läuferbaugruppe bzw. deren Wechselwirkungsvorrichtung kann beispielsweise eine Erstreckungslänge in der Anordnungslängsrichtung von ca. 5 Metern aufweisen und die einzelnen Statorabschnitte können eine Länge im Bereich von 2 Metern aufweisen. Die in den einzelnen Statorabschnitten vorgesehenen Spulen können eine Windungsszahl im Bereich von 10 Windungen aufweisen.

Es wird darauf hingewiesen, daß, obgleich vorangehend ein System beschrieben worden ist, in welchem die Läuferbaugruppe 20 sich bewegt und die Statoranordnung 10 stationär ist, in gleicher Weise ein System möglich ist, bei welchem die Läuferbaugruppe 20 feststeht und die Statoranordnung 10 sich dann bewegt. Das heißt, die Ausdrücke "Läufer" bzw. "Stator" sind hier lediglich in Anlehnung an die im Bereich von Linearantriebssystemen üblichen Verwendungen dieser Ausdrücke eingesetzt worden; diese Verwendung der Ausdrücke "Läufer" und "Stator" ist jedoch hinsichtlich der jeweiligen Bewegungsmöglichkeiten in keinem Falle als einschränkend zu betrachten. Ferner wird darauf hingewiesen, daß das erfindungsgemäße Linearantriebssystem nicht lediglich als Antriebssystem einsetzbar ist, sondern es ebenso möglich ist, dieses System als Lineargeneratorsystem zu betreiben, d. h. durch die Relativbewegung zwischen Läuferbaugruppe und Statoranordnung in den einzelnen Abschnitten der Statoranordnung Spannungen zu induzieren und diese nachfolgend zur Energiegewinnung zu nutzen.

Die Fig. 3 zeigt ein weiteres erfindungsgemä-ßes Linearantriebssystem, bei welchem Komponenten, welche hinsichtlich Aufbau und Funktion Komponenten der mit Bezug auf Fig. 1 beschriebenen Ausgestaltungsform entsprechen, mit den gleichen Bezugszeichen unter Hinzufügung eines Anhangs "a" bezeichnet sind.

Die Statoranordnung 10a des Linearantriebssystems umfaßt wiederum eine Vielzahl an Statorabschnitten 12a, welche in einer Anordnungslängsrichtung L aufeinanderfolgend angeordnet sind. Wie man in Fig. 3 erkennt, sind die Statorabschnitte 12a mit dem Umrichter 18a als Energiequelle wieder in einer Parallelschaltungsanordnung verbunden. Das heißt, jeder der Statorabschnitte 12a ist über eine zugeordnete Schaltervorrichtung 24a mit einer Leitung 16a verbunden, welche zum bzw. vom Umrichter 18 weg führt. Ferner ist jede der Schaltvorrichtungen 24a durch eine Ansteuervorrichtung 40a sowie in der vorangehend beschriebenen Ausgestaltungsform über Ansteuerleitungen 41a zum Öffnen bzw. Schließen ansteuerbar. Die Relativpositionierung der Läuferbaugruppe 20a bezüglich der Statoranordnung 10a wird wieder durch eine Relativpositionierungserfassungseinrichtung 42a, beispielsweise in Form mehrerer Stellungssensoren, erfaßt und über die Signalleitung 44a in Form eines Positionssignals in die Steuervorrichtung 40a eingegeben.

Um das eingangs erwähnte Problem bei den Parallelschaltungsanordnungen des Standes der Technik zu beseitigen, ist das in Fig. 3 gezeigte Linearantriebssystem derart ausgebildet, daß durch die Ansteuervorrichtung 40a jeweils lediglich diejenigen Schaltvorrichtungen 24a in einen geschlossenen, leitenden Zustand geschaltet werden, deren zugeordnete Statorabschnitte 12a im wesentlichen vollständig von der Anordnungslängsrichtung mit der Läuferbaugruppe 20a überlappt sind, so daß sie in wesentlichem Maße zur Vortriebskrafterzeugung beitragen und nicht lediglich aufgrund des geringeren Widerstands ein Großteil des Stroms über diese fließt. Man erkennt dies in Fig. 3, bei welcher diejenigen Statorabschnitte 12a, welche vollständig in der Anordnungslängsrichtung durch die Läuferbaugruppe 20a überlappt sind, mit einem Kreuz gekennzeichnet sind; diese Statorabschnitte werden durch Schließen der zugeordneten Schaltervorrichtungen 24a bestromt, so daß nur diese Statorabschnitte 12a zur Vortriebskrafterzeugung beitragen. Die beiden seitlich von den mit einem Kreuz markierten Statorabschnitten 12a angeordneten Statorabschnitte 12a, welche sich mit der Läuferbaugruppe 20a nur teilweise überlappen, werden nicht zugeschaltet, so daß kein Strom über diese abfließen kann. Eine derartige Ausgestaltung eines Linearantriebssystems ist besonders dann vorteilhaft, wenn die Länge der Läuferbaugruppe 20a bzw. von deren Wechselwirkungsvorrichtung 21 a in der Anordnungslängsrichtung L deutlich länger ist als diejenige der Statorabschnitte 12a. Beispielsweise findet ein derartiges Linearantriebssystem vorteilhafterweise Anwendung, wenn die Länge des der Läuferbaugruppe 20a in der Anordnungslängsrichtung L größer oder gleich 10 Meter ist und dabei die Länge der Statorabschnitte 12a im Bereich vom 2 Metern liegt. Eine derartige Länge hat zur Folge, daß auch dann, wenn diejenigen Statorabschnitte 12a, welche sich mit der Läuferbaugruppe 20a nur teilweise überlappen, nicht bestromt werden, noch ausreichend viele Statorabschnitte 12a vorgesehen sind, welche von der Läuferbaugruppe 20a vollständig überlappt sind und bestromt werden, um nur durch diese Statorabschnitte 12a eine Vortriebskraft zu erzeugen.

Da bei dieser Parallelschaltungsanordnung bereits alle einzelnen Statorabschnitte 12a durch die jeweils zugeordneten Schaltervorrichtungen 24a separat zu- und abschaltbar sind, sind diese auch im Bremsbetrieb, bei dem in den einzelnen Statorabschnitten relativ hohe Spannungen induziertwerden, jeweils separat gehalten, so daß eine Spannungsaddition nicht auftreten kann. Es sollte hier darauf hingewiesen werden, daß bei Linearantriebssystemen, welche mit der Paralletschaltungsanordnung arbeiten, die Wicklungszahl der Spulen in den Antriebsabschnitten höher ist als bei Serienschaltung. So kann beispielsweise die Wicklungszahl hier im Bereich von 30 Wicklungen liegen.

Für die vorangehend beschriebenen Schaltervorrichtungen bzw. Gruppenschaltervorrichtungen werden vorteilhafterweise Thyristoren verwendet, da diese sehr kurze Schaltzeiten aufweisen und bei hohen Lastströmen einsetzbar sind. Dies ist für den Betrieb bzw. den Einsatz bei Linearantriebssystemen eine unabdingbare Voraussetzung. Um sicherzustellen, daß bei Vorzeichenwechsel des Laststroms, d. h. dem Nulldurchgang des Laststroms nach Ausgabe eines Lastspannungsimpulses, der Thyristorschalter nach dem Nulldurchgang nur dann wieder in einen leitenden Zustand geht, wenn er durch gezielte Ansteuerung dazu gebracht werden soll, werden gemäß der vorliegenden Erfindung vorzugsweise schnelle Thyristoren mit einer Freiwerdezeit im Bereich vom 40 µs verwendet. Dies stellt bei einem zeitlichen Impulsabstand der Lastimpulse von ca. 120 µs sicher, daß der Thyristor beim nachfolgenden Anstieg des Laststroms in der gleichen Richtung nicht wieder in einen leitenden Zustand geht. Das heißt, die relativ kurze Freiwerdezeit kann dazu führen, daß die Ladungsträger aus dem Thyristor im wesentlichen vollständig abgeflossen sind, bevor der Laststrom in der gleichen Stromflußrichtung den Schwellenwert, welcher zum Durchschalten des Thyristors erforderlich ist, wieder überschreitet.

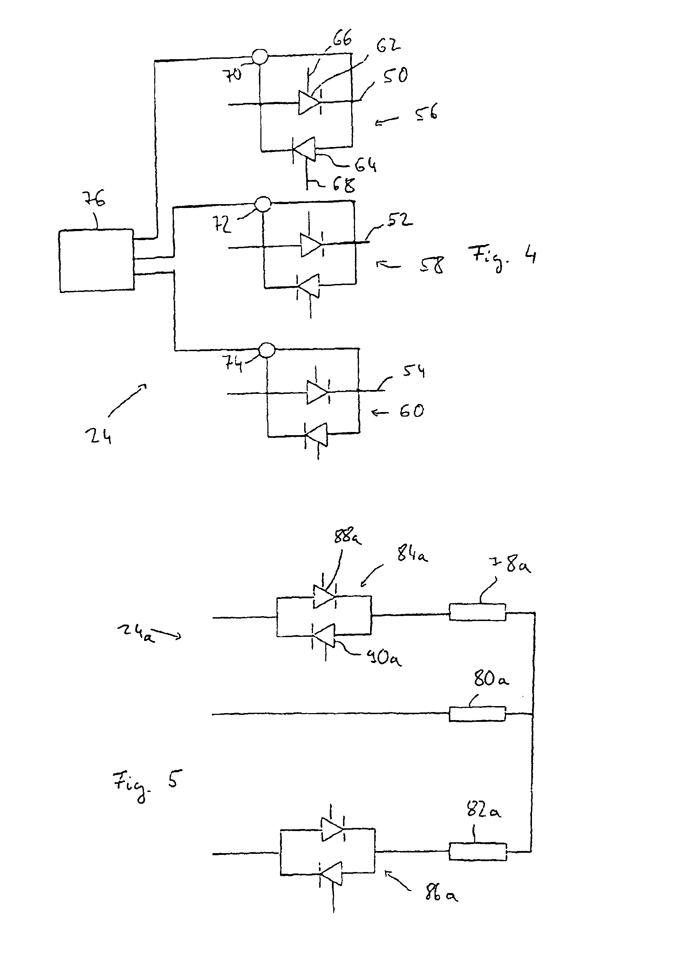

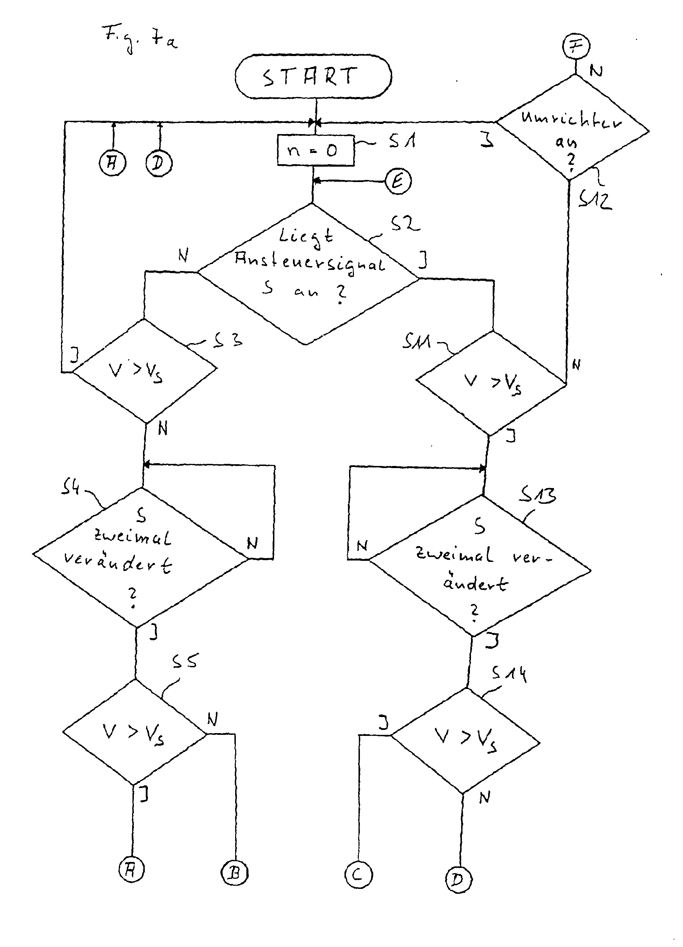

Die Fig. 4 und 5 zeigen jeweils Thyristorschaltervorrichtungen, wie sie bei den erfindungsgemäßen Linearantriebssystemen eingesetzt werden können. Dabei zeigt die Fig. 4 eine Schaltervorrichtung, welche bei dem in Fig. 1 gezeigten Linearantriebssystem mit schaltungsmäßig serieller Anordnung der Statorabschnitte 12 Anwendung findet. Da derartige Linearantriebssysteme im allgemeinen als Dreiphasen-Systeme aufgebaut sind, weist die Schaltervorrichtung 24 für jede der drei Phasen 50, 52, 54 eine jeweilige Schaltereinheit 56, 58, 60 auf, welche jeweils aus zwei Thyristoren 62, 64, gebildet ist. Die Thyristoren 62, 64 sind zueinander parallel und mit zueinander entgegengesetzten Stromleitungsrichtungen geschaltet. Jeder der Thyristoren ist über eine schematisch dargestellte Ansteuersignalleitung mit der Ansteuervorrichtung 40 in Fig. 1 verbunden. Das heißt, soll durch Geschlossenschalten einer Schaltervorrichtung 24 bei der seriellen Anordnung der Fig. 1 einer der Statorabschnitte 12 überbrückt werden, so werden die Thyristoren der drei Schaltereinheiten 56, 58, 60 leitend geschaltet.

Man erkennt in Fig. 4 ferner, daß an jeder der Schaltereinheiten 56, 58, 60 durch jeweilige Spannungsmesser 70, 72, 74 die Spannungen zwischen den beiden entgegengesetzten Endseiten der jeweiligen Schaltereinheiten 56, 58, 60 abgegriffen werden und zu einer Funktionsüberprüfungseinrichtung 76 in Form von Spannungssignalen geleitet werden. Durch die Funktionsüberprüfungseinrichtung wird eine später beschriebene Diagnose der einzelnen Schaltervorrichtungen bzw. Schaltereinheiten vorgenommen.

Die Fig. 5 zeigt eine Schaltervorrichtung 24a, welche für das in Fig. 3 gezeigte Linearantriebssystem mit schaltungsmäßig paralleler Anordnung der einzelnen Statorabschnitte 12a geeignet ist. Die Fig. 5 zeigt schematisch die drei Spulenabschnitte 78a, 80a, 82a der drei Phasen eines Statorabschnitts 12a. Man erkennt, daß in der Phase 78a und 82a wiederum Schaltereinheiten 84a, 86a mit jeweils zwei leitungsmäßig entgegengesetzt und parallel zueinander geschalteten Thyristoren 88a, 90a vorgesehen sind. Jeder der Thyristoren steht, so wie vorangehend beschrieben, wieder in Ansteuerverbindung mit der Ansteuervorrichtung 40a. Bei einer Parallelanordnung der Statorabschnitte 12a genügt das Vorsehen zweier Schaltereinheiten 84a, 86a bei jeder Schaltervorrichtung 24a, da durch diese beiden Schaltereinheiten 84a, 86a der Stromfluß durch sämtliche Spulenabschnitte 78a, 80a, 82a der drei Phasen wahlweise unterbrochen oder freigegeben werden kann, und dies in beiden Flußrichtungen. Werden nämlich die beiden Schaltereinheiten 84a, 86a in einen nicht leitenden offenen Zustand gebracht, so kann auch eine an der mittleren, zum Spulenabschnitt 80a führenden Leitung anliegende Spannung nicht zum Stromfluß führen, da durch die Unterbrechung der Schaltereinheiten 84a, 86a kein Stromflußweg vorhanden ist. In gleicher Weise kann durch Schließen der einzelnen Schaltereinheiten 84a, 86a, d. h. der jeweiligen darin enthaltenen Thyristoren für die zugeordneten Stromhalbwellen ein Stromfluß ermöglicht werden.

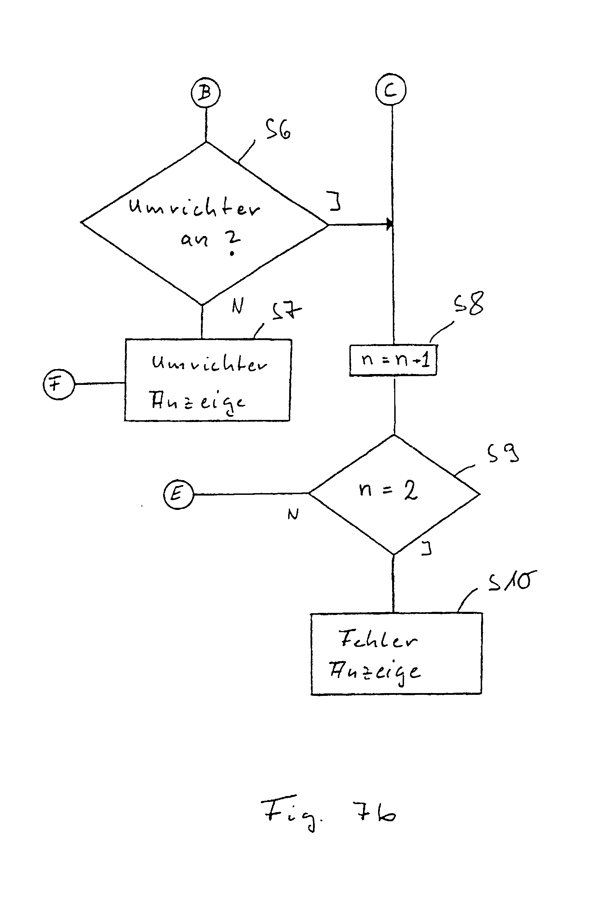

Es ist bekannt, daß Thyristoren dadurch in einen leitenden Zustand gebracht werden, daß zwischen Gate und Kathode des Thyristors in Durchlaßrichtung eine Spannung angelegt wird. Es wird durch diese Spannung und die dadurch erzeugten Emitterströme in kurzer Zeit ein Ladungsträgerüberschuß erzeugt, wodurch der Thyristor gezündet wird, d. h. leitend wird und auch leitend bleibt, wenn diese Steuerspannung abgeschaltet wird. Es genügt ein kurzer Strom- oder Spannungsimpuls zum Zünden des Thyristors. Nachdem der Thyristor gezündet hat und der Laststrom eine vorbestimmte Schwelle überschritten hat, bleibt der Thyristor in seinem leitenden Zustand, bis der Laststrom die Schwelle wieder unterschreitet. Es hat sich gezeigt, daß bei Linearantriebssystemen der Stromzustand oftmals nicht genau definierbar ist. Dies kann unter anderem dazu führen, daß beim Anlegen eines Zündimpulses oder Ansteuerimpulses an einen Thyristorschafter der Laststrom nur relativ langsam ansteigt und den zum Offenhalten des Thyristors erforderlichen Schwellenwert erst dann überschreiten würde, wenn der Zünd- oder Ansteuerimpuls bereits wieder abgefallen ist. Das heißt, der Zünd- oder Ansteuerimpuls hätte nicht dazu geführt, daß der Thyristor in seinem offenen Zustand bleibt. Um dies zu vermeiden, wird gemäß der vorliegenden Erfindung einem in einer der Schaltervorrichtungen oder Gruppenschaltervorrichtungen verwendeten Thyristor nicht lediglich ein Ansteuerimpuls zugeführt, sondern der Thyristor bzw. die Thyristoren der Schaltervorrichtungen werden während der ganzen Zeit, während welcher sie leitend gehalten werden sollen, mit einem Gleichstrom-Schließschaltsignal versorgt. Eine Schaltung, mit welcher dies vorgenommen werden kann, ist in Fig. 6 gezeigt. Man erkennt in Fig. 6 einen Thyristor 90, der beispielsweise in einer der Schaltervorrichtungen oder Gruppenschaltervorrichtungen, so wie vorangehend beschrieben, integriert sein kann. Dem Thyristor 90 ist eine Gleichstrom-Schließschaltsignalerzeugungsvorrichtung 92 zugeordnet. Diese umfaßt einen Transformator 94 mit nachgeschalteter Gleichrichterstufe 96, bestehend aus einer Diode 98 und einem Kondensator 100. Die dadurch erzeugte Gleichspannung wird über eine Signalleitung 102 und eine Signalleitung 104 zwischen dem sogenannten Gate und der Kathode des Thyristors 90 angelegt. In der Leitung 102 ist ein Schalter 106 in Form eines pnp-Transistors vorgesehen. Der pnp-Transistor 106 wird durch einen weiteren Transistor, nämlich einen npn-Phototransistor 108 angesteuert, welcher Teil eines Optokopplers 110 ist. Der Optokoppler 110 umfaßt ferner eine lichtemittierende Diode 112, welche durch eine Signalleitung 114 mit der Ansteuervorrichtung verbunden ist. Das heißt, bei Zufuhr eines Ansteuersignals über die Signalleitung 114 gibt die Diode 112 Licht ab, welches der Phototransistor 108 aufnimmt und dadurch den Transistor 106 leitend schaltet. Somit schaltet das Licht der Diode 112 indirekt den Transistor 106. Das Ansteuersignal von der Ansteuervorrichtung wird so lange zugeführt, so lange der Thyristor 90 in seinem leitenden Zustand gehalten werden soll. Es kann somit sichergestellt werden, daß unabhängig vom Laststromzustand der Thyristor 90 immer für eine definierte Zeitdauer leitend gehalten ist.

Es wird hier darauf hingewiesen, daß zur Energieversorgung anstelle des Transformators mit dem nachgeschalteten Gleichrichter ebenso eine Gleichstromquelle in Form einer Batterie, eines Akkumulators oder dergleichen verwendet werden kann.

Da derartige Schalteranordnungen mit einer Vielzahl an Schaltervorrichtungen und einer noch größeren Vielzahl an Thyristoren der ständigen Gefahr einer Fehlfunktion bzw. Beschädigung unterliegen, ist gemäß einem weiteren Aspekt dervorliegenden Erfindung vorgesehen, daß diese einzelnen Schaltervorrichtungen in einem Diagnoseverfahren hinsichtlich ihrer Funktionsfähigkeit überprüft werden. Das heißt, es wird überprüft, ob, abhängig von einem definierten Ansteuerzustand, die jeweiligen Thyristoren oder Schalter in einem entsprechenden Schaltzustand sind. Liegt kein Ansteuersignal an, d. h. sollte der jeweilige Thyristor in einem offenen, nicht leitenden Zustand sein, so sollte in entsprechender Weise der Stromfluß über den jeweiligen Schalter hinweg null sein oder einen bestimmten Wert haben, wenn der jeweilige Schalter korrekt arbeitet.

Im folgenden wird mit Bezug auf die Fig. 7a und 7b ein Beispiel eines derartigen Diagnoseverfahrens zur Funktionsüberprüfung von Thyristorschaltern beschrieben. Dieses Verfahren ist insbesondere bei Schaltervorrichtungen bzw. Schaltern geeignet, bei welchen die einzelnen Thyristoren während der Zeit, während der sie auch tatsächlich geschlossen, d. h. leitend sein sollen, permanent mit einem Ansteuersignal versorgt werden, da dann in einfacher Weise eine Zuordnung des tatsächlichen Schalterzustands zu dem Soll-Schalterzustand, welcher durch das Ansteuersignal definiert werden kann, vorgenommen werden kann.

Im folgenden wird die Vorgehensweise bei der Funktionsüberprüfung mit Bezug auf die Schaltervorrichtung 24 der Fig. 4 beschrieben. Es wird jedoch darauf hingewiesen, daß eine entsprechende Funktionsüberprüfung beispielsweise auch bei der Schaltervorrichtung 24a gemäß Fig. 5 oder bei anderen Schaltervorrichtungen möglich ist.

Wie bereits beschrieben, ist jeder der Schaltereinheiten 56, 58, 60 eine Spannungsmeßvorrichtung 70, 72 bzw. 74 zugeordnet, welche den Spannungsabfall über die jeweilige Schaltereinheit 56, 58, 60 hinweg mißt. Es wird im folgenden zunächst eine einzige der Schaltereinheit 56, 58, 60 betrachtet und mit Bezug auf diese die Vorgehensweise bei der Funktionsüberprüfung beschrieben.

Nach dem Start der Funktionsüberprüfung wird zunächst in einem Schritt S1 ein nachfolgend beschriebener Zählwert n auf O gesetzt. Nachfolgend wird im Schritt S2 bestimmt, ob ein Ansteuersignal S an dem Thyristor, d. h. dem Thyristor 62 oder dem Thyristor 64, anliegt. Dies kann beispielsweise durch eine entsprechende Anfrage an die Ansteuervorrichtung vorgenommen werden. Ergibt die Abfrage im Schritt S2, daß kein Ansteuersignal vorliegt, so wird in einem Schritt S3 bestimmt, ob der durch die Spannungsmeßvorrichtung 70 gemessene Spannungsabfall über die Schaltereinheit 56 hinweg größer als ein bestimmter Schwellenwert Vₛ ist.

Ist der gemessene Spannungsabfall V größer als der Schwellenwert Vₛ, so kann bestimmt werden, daß kein Fehler vorliegt, und das Programm schreitet zurück zum Start. Dies bedeutet also, daß in einem Zustand, in dem kein Ansteuersignal anliegt und somit die Thyristoreinheit 56 nicht leiten sollte, auch ein entsprechend großer Spannungsabfall vorhanden ist, was darauf hinweist, daß ein Stromfluß über diese Schaltereinheit 56 hinweg nicht vorliegt.

Wird jedoch im Schritt S3 bestimmt, daß der gemessene Spannungswert V nicht größer als der Schwellenwert Vₛ ist, so wird in einem nachfolgenden Schritt S4 zunächst so lange gewartet, bis das Ansteuersignal S sich zweimal verändert hat. Auch dies kann wieder durch eine entsprechende Anfrage oder Überprüfung der Ansteuervorrichtung vorgenommen werden. In diesem Schritt S4 wird also so lange gewartet, bis wieder ein Zustand vorliegt, der der Antwort "N" im Schritt S2 entspricht, d. h. kein Ansteuersignal anliegt. Es wird hier davon ausgegangen, daß ein Ansteuersignal dann, wenn der Thyristor bzw. die Schaltereinheit 56 in einen leitenden Zustand gebracht werden soll, auf einem hohen Pegel ist, und dann, wenn ein nicht leitender Zustand vorgesehen sein soll, das Ansteuersignal auf einem niederen Pegel, beispielsweise bei null ist.

Hat sich also das Ansteuersignal zweimal verändert, ist also von einem niederen Pegel auf einen hohen Pegel und wieder zurück auf den niederen Pegel gegangen, so wird in einem Schritt S5 noch einmal abgefragt, ob der dann gemessene Spannungswert V grö-ßer als die Schwellenspannung Vₛ ist. Ist dies der Fall, so wird ebenfalls wieder zum Start zurückgegangen, da dann wieder der erwartete Zustand vorliegt und davon ausgegangen werden kann, daß das im Schritt S3 erhaltene Ergebnis auf einer kurzzeitigen Störung beruht hat. Wird im Schritt S5 jedoch festgestellt, daß der Spannungsabfall V nicht größer als der Schwellenwert Vₛ ist, so wird in einem nachfolgenden Schritt S6 überprüft, ob der die Spannung liefernde Umrichter tatsächlich eingeschaltet ist. Auch ein Zustand, in dem aufgrund irgendwelcher Störungen der Umrichter nicht die gewünschte Lastspannung liefert, ist nämlich ein Zustand, in dem selbst dann, wenn kein Ansteuersignal anliegt, der Spannungsabfall über die Schaltereinheit 56 hinweg nicht größer als der Schwellenwert Vₛ sein kann. Ergibt die Nachfrage bzw. Überprüfung im Schritt S6, daß der Umrichter nicht an ist, d. h. nicht die gewünschte Lastspannung liefert, so kann beispielsweise in einem Schritt S7 eine Anzeige erfolgen, welche darauf hinweist, daß der Umrichter nicht arbeitet, um gegebenenfalls erforderliche Maßnahmen zu ergreifen.

Ergibt die Überprüfung im Schritt S6, daß der Umrichter an ist, was bedeutet, daß bei arbeitendem Umrichter wiederholt die Abfrage, ob der Spannungsabfall V größer als der Schwellenwert Vₛ ist, zu dem Ergebnis geführt hat, daß der erforderliche Spannungsabfall nicht vorhanden ist, so wird in einem nachfolgenden Schritt S8 1 zu dem Zählwert n addiert. Ergibt eine Abfrage in einem Schritt S9 dann, daß der Zählwert n 2 ist, d. h. ist dieser Fehlerzustand, in dem selbst bei Abwarten einer zweimaligen Veränderung des Ansteuersignals S das Abfrageergebnis sich nicht verändert hat, zweimal aufeinanderfolgend aufgetreten, so wird in einem Schritt S10 eine Fehleranzeige erzeugt, so daß diejenige Schaltervorrichtung bzw. Schaltereinheit, welche den Fehler aufweist, repariert oder ersetzt werden kann. Ergibt die Frage im Schritt S9, daß der Zählwert noch nicht 2 ist, so geht die Überprüfung zurück zu einem Punkt, welcher unmittelbar vor der Frage, ob ein Ansteuersignal anliegt oder nicht, liegt.

Ergibt die Frage, oder Überprüfung im Schritt S2, daß ein Ansteuersignal S anliegt, so wird in einem Schritt S11 wiederum überprüft, ob der gemessene Spannungswert V größer als der Schwellenwert Vₛ ist. Ist der Spannungswert nicht größer als der Schwellenwert Vₛ, so wird in einem nachfolgenden Schritt S12 überprüft, ob der Umrichter tatsächlich an ist. Ergibt die Frage oder Überprüfung im Schritt S12, daß der Umrichter tatsächlich an ist, so geht die Verarbeitung wieder zurück zum Start, da dies ein Hinweis darauf ist, daß bei arbeitendem Umrichter und anliegenden Steuersignal ein Stromfluß über den über die Schaltervorrichtung bzw. Schaltereinheit hinweg vorliegt. Ergibt die Abfrage im Schritt S12, daß der Umrichter nicht an ist, so schreitet das Programm zum Schritt S7, um wieder anzuzeigen, daß der Umrichter nicht arbeitet.

Wenn das Überprüfungsergebnis im Schritt S11 zu dem Ergebnis führt, daß der gemessene Spannungsabfall V trotz anliegendem Steuersignal S größer als der Schwellenwert Vₛ ist, was an sich darauf hinweist, daß der entsprechende Schalter bzw. Thyristor nicht in den leitenden Zustand gegangen ist, so wird in einem Schritt S13 zunächst wieder abgewartet, bis das Ansteuersignal S sich zweimal verändert hat, d. h. wieder der gleiche Ansteuerzustand vorliegt. Ergibt eine erneute Überprüfung in einem Schritt S14, daß der Spannungsabfall V nunmehr nicht größer als der Schwellenwert Vₛ ist, so geht die Verarbeitung wieder unmittelbar zum Start zurück, da dies darauf hinweist, daß die Schaltervorrichtung bzw. die Schaltereinheit korrekterweise im leitenden Zustand ist. Es wird dann angenommen, daß das Abfrageergebnis im Schritt S11 auf einer momentanen Störung beruht hat. Ergibt jedoch die Abfrage im Schritt S14 erneut, daß der Spannungsabfall V größer als der Schwellenwert Vₛ ist, d. h. auch nach zweimaliger Veränderung des Ansteuersignals hat sich am Leitungszustand der Schaltervorrichtung bzw. Schaltereinheit nichts geändert, so geht das Programm wieder zum Schritt S8, in welchem 1 zum Zählwert n addiert wird. Ergibt die nachfolgende Abfrage im Schritt S9 wieder, daß der Zählwert n 2 noch nicht erreicht hat, so geht die Verarbeitung wieder zurück zu einem Punkt unmittelbar vor der Abfrage, ob ein Ansteuersignal anliegt oder nicht. Ergibt die Abfrage im Schritt S9 jedoch, daß der Fehlerzustand, daß in zwei unmittelbar aufeinanderfolgenden Abfragen die Schaltervorrichtung nicht in dem erwarteten Zustand war, so wird im Schritt S10 wieder ein Fehler angezeigt.

Mit der vorangehend beschriebenen Prozedur kann also überprüft werden, ob jeweils abhängig von dem gewünschten Ansteuerzustand die jeweiligen Schaltervorrichtungen bzw. Schaltereinheiten bzw. deren Thyristoren in den gewünschten Schaltzuständen sind. Ist dies wiederholt nicht der Fall, so wird eine Fehleranzeige erzeugt. Es ist selbstverständlich, daß dieses Programm während des Betriebs eines Linearantriebssystems wiederholt, vorzugsweise periodisch durchgeführt wird, um eine permanente Überprüfung zu erhalten.

Wie bereits vorangehend beschrieben, werden bei Linearantriebssystemen im allgemeinen Dreiphasen-Stromsysteme verwendet, so daß, wie in den Fig. 4 und 5 erkennbar, bei zumindest zwei der Phasen einzelne Schaltereinheiten vorgesehen sein müssen. Es ist dann selbstverständlich, daß die vorangehende Überprüfungsprozedur für jede einzelne der Schaltereinheiten und bei jeder Schaltervorrichtung durchgeführt wird. Ergibt die Überprüfung bei einer Schaltervorrichtung, daß die Ergebnisse einzelner Schaltereinheiten dieser Vorrichtung uneinheitlich sind, d. h. weist beispielsweise die Schaltereinheit 56 darauf hin, daß ein hoher Spannungsabfall vorliegt, wohingegend die Schaltereinheit 58 darauf hinweist, daß kein Spannungsabfall vorliegt, so ist dies ein Anzeichen dafür, daß eine der Schaltereinheiten eine Fehlfunktion aufweist, so daß in jedem Falle dann, wenn ein uneinheitliches Ergebnis erzielt wird, eine Fehleranzeige erzeugt wird. Es kann somit sichergestellt werden, daß selbst dann, wenn von drei Schaltereinheiten auch nur eine einen Hinweis auf eine Fehlfunktion zeigt, geeignete Maßnahmen zur Behebung des Mangels ergriffen werden können.

Die Überprüfung mehrerer Schaltereinheiten, d.h. mehrerer in einem Mehrphasensystem parallel arbeitender Thyristoren oder dergleichen, ist insbesonbdere dann von Bedeutung, wenn die Thyristoren auf Kurzschluß überprüft werden sollen. Das heißt, diese Überprüfung findet statt, wenn kein Ansteuersignal anliegt, so daß dann, wenn der Umrichter Spannungsimpulse liefert, an den einzelnen Thyristoren ein entsprechender Spannungsabfall vorliegen sollte. Zeigt einer der Thyristoren an, daß der entsprechend hohe Spannungsabfall nicht vorliegt, so kann dies entweder daran liegen, daß der Thyristor einen Kurzschluß aufweist, oder daran, daß keine Spannungsimpulse vom Umrichter geliefert werden und somit ein entsprechender Spannungsabfall am Thyristor nicht vorliegen kann. Zeigt eine entsprechende Überprüfung bei einem in einer anderen Phase angeordneten Thyristor, daß trotz Fehlen eines Ansteuersignals ein hoher Spannungsabfall vorliegt, so ist dies ein Hinweis darauf, daß der Umrichter korrekt arbeitet und eine Lastspannung liefert; daraus kann geschlossen werden, daß der erstgenannte Thyristor, welcher den Spannungsabfall nicht zeigt, einen Fehler aufweist. Es kann somit durch den Vergleich der bei mehreren Thyristoren vorgenommenen Untersuchungen sichergestellt werden, ob das Fehlen eines zu erwartenden Spannungsabfalls an einem Fehler von einem der Thyristoren liegt oder daran, daß der Umrichter nicht korrekt arbeitet oder nicht in Betrieb ist. Es kann somit auf eine zusätzliche Anordnung zum Überprüfen, ob der Umrichter in Betrieb ist, verzichtet werden. In dem Falle, daß die Thyristoren auf Unterbrechnung zu untersuchen sind, d.h. zu untersuchen ist, ob trotz Anliegen des Ansteuersignals ein hoher Spannungsabfall über die Thyristoren hinweg vorhanden ist, müssen die einzelnen Untersuchungen der in den verschiedenen Phasen angeordneten Thyristoren nicht verglichen werden, da bereits das Erfassen eines zu hohen Spannungsabfalls an einem der Thyristoren darauf hinweist, daß dieser, obwohl er leitend sein sollte, nicht ausreichend leitet, und daß eine entsprechende Lastspannung durch den Umrichter geliefert wird. Das heißt, ein Vergleich der von den einzelnen Thyristoren in verschiedenen Phasen erhaltenen Überprüfungsergebnisse ist in diesem Falle nicht unbedingt erforderlich.

## Patentansprüche

1. Llnearantriebssystem, umfassend
- eine Statoranordnung (10) mit einer Mehrzahl von in einer Anordnungslängsrichtung (L) aufeinanderfolgenden Statorabschnitten (12), wobei jeder Statorabschnitt (12) wenigstens eine Statorwicklung aufweist,
- eine Energiequelle (18) zur Versorgung der Statorabschnitte (12) mit elektrischer Energie,
- eine Schalteranordnung (26) mit jeweils einer Schaltervorrichtung (24) für jeden Statorabschnitt (12), um in Abhängigkeit von einer Schaftstellung jeder der Schaltervorrichtungen (24) wahlweise elektrische Energie von der Energiequelle (18) zu den den Schaltvorrichtungen (24) jeweils zugeordneten Statorabschnitten (12) zu leiten,
- eine Ansteuervorrichtung (40) zum Ansteuern jeder Schaltervorrichtung (24) der Schalteranordnung (26), um zum Zuführen elektrischer Energie zu ausgewählten Statorabschnitten (12) die diesen zugeordneten Schaltervorrichtungen (24) in einen ersten Schaltzustand zu bringen oder/und in diesem zu haften, und die den nicht ausgewählten Statorabschnitten (12) zugeordneten Schattervorrichtungen (24) in einen zweiten Schaltzustand zu bringen oder/und in diesem zu halten, wenigstens eine bezüglich der Statoranordnung (10) in der Anordnungslängsrichtung (L) bewegbare Läuferbaugruppe (20) mit wenigstens einer Wechselwirkungsvorrichtung (21), welche durch Wechselwirkung mit einem in den Statorabschnitten (12) erzeugten Magnetfeld eine zwischen der wenigstens einen Läuferbaugruppe (20) und der Statoranordnung (10) wirkende AntriebsBrems-Kraft erzeugt,
wobei
die Statorabschnitte (12) zur Versorgung mit elektrischer Energie von der Energiequelle (18) in einer Serienschattungsanordnung angeordnet sind und daß die Schaftervorrichtungen (24) zu den jeweils zugeordneten Statorabschnitten (12) schaltungsmäßig parallel angeordnet sind,
**dadurch gekennzeichnet, daß** die Erstrekkungslänge der wenigstens einen Wechselwirkungsvorrichtung (21) in der Anordnungslängsrichtung (L) wenigstens das Zweifache der Erstrekkungslänge jedes Statorabschnitts (12) in der Anordnungslängsnchtung (L) beträgt, wobei die Austeuer vorrichtung (40) dazu unsgebildet ist, diejenigen Schaftvorrichtungen (24) in den ersten Schaltzustand zu bringen, deren zugeordnete Statorabschnitte (12) sich mit der wenigstens einen Wechselwirkungsvorrichtung überlappen.

2. Linearantriebssystem nach Anspruch 1, **dadurch gekennzeichnet, daß** die Statorabschnitte (12) in wenigstens zwei Statorabschnittgruppen (36, 38) aufgeteilt sind, von welchen wenigstens eine Statorabschnittgruppe (36, 38) wenigstens zwei Statorabschnitte (12) umfaßt, und daß die Schalteranordnung (26) ferner eine der wenigstens einen Statorabschnittgruppe (36, 38) mit zwei Statorabschnitten (12) zugeordnete und zu den schaltungsmäßig seriell angeordneten Statorabschnitten (12) dieser Statorabschnittgruppe (36, 38) und zu den den Statorabschnitten (12) dieser Statorabschnittgruppe (36,38) zugeordneten Schaltervorrichtungen (24) parallel geschaltete Gruppenschaltervorrichtung (34) umfaßt, welche durch die Steuervorrichtung (40) ansteuerbar ist.

3. Linearantriebssystem nach Anspruch 1 oder 2, **dadurch gekennzeichnet, daß** zwischen wenigstens zwei Statorabschnitten (12) eine Schutzschaltervorrichtung (22) angeordnet ist, welche vorzugsweise durch die Ansteuervorrichtung (40) zur Unterbrechung der seriellen Verbindung zwischen den beiden Statorabschnitten (12) ansteuerbar ist.

4. Linearantriebssystem nach Anspruch 3, **dadurch gekennzeichnet, daß** zwischen allen einander benachbarten Statorabschnitten (12) jeweils eine Schutzschaltervorrichtung (22) angeordnet ist.

5. Linearantriebssystem nach einem der Ansprüche 1 bis 4, **dadurch gekennzeichnet, daß** die Energiequelle (18) eine Dreiphasen-Energiequelle (18) ist und daß die Schaltervorrichtungen (24) und gegebenenfalls die oder jede Gruppenschaltervorrichtung (34) für jede Phase eine Schaltereinheit (56, 58, 60) umfaßt, wobei die Schaltereinheit (56, 58, 60) jeder Schaltervorrichtung (24) beziehungsweise Gruppenschaltervorrichtung (34) durch die Ansteuervorrichtung (40) ansteuerbar ist.

6. Linearantriebssystem nach Anspruch 5, **dadurch gekennzeichnet, daß** jede Schaltereinheit (56, 58, 60) ein Paar parallel geschalteter Thyristoren (62, 64) umfaßt, wobei jeder Thyristor (62, 64) eines Paars in seinem geschlossenen, leitenden Schalterzustand in einer Stromflußrichtung le'rtend ist, welche der Stromflußrichtung des anderen Thyristors (62, 64) des Paars entgegengesetzt ist.

7. Linearantriebssystem nach einem der Ansprüche 1 bis 6, **dadurch gekennzeichnet, daß** der erste Schaltzustand ein offener, nicht leitender Schaltzustand ist und daß der zweite Schaltzustand ein geschlossener, leitender Schaltzustand ist.

8. Linearantriebssystem, umfassend
- eine Statoranordnung (10) mit einer Mehrzahl von in einer Anordnungslängsrichtung (L) aufeinanderfolgenden Statorabschnitten (12), wobei jeder Statorabschnitt (12) wenigstens eine Statorwicklung aufweist,
- eine Energiequelle (18) zur Versorgung der Statorabschnitte (12) mit elektrischer Energie,
- eine Schalteranordnung (26) mit jeweils einer Schaltervorrichtung (24) für jeden Statorabschnitt (12), um in Abhängigkeit von einer Schaltstellung jeder der Schaltervorrichtungen (24) wahlweise elektrische Energie von der Energiequelle (18) zu den den Schaltvorrichtungen (24) jeweils zugeordneten Statorabschnitten (12) zu leiten,
- eine Ansteuervorrichtung (40) zum Ansteuern jeder Schaltervorrichtung (24) der Schalteranordnung (26), um zum Zuführen elektrischer Energie zu wenigstens einem ausgewählten Statorabschnitt (12) die dem wenigstens einen ausgewählten Statorabschnitt (12) zugeordnete Schaltervorrichtung (24) in einen ersten Schaltzustand zu bringen oder/und in diesem zu hatten, und die den nicht ausgewählten Statorabschnitten (12) zugeordneten Schaltervorrichtungen (24) in einen zweiten Schaltzustand zu bringen oder/und in diesem zu halten,
- wenigstens eine bezüglich der Statoranordnung (10) in der Anordnungslängsrichtung (L) bewegbare Läuferbaugruppe (20) mit wenigstens einer Wechselwirkungsvorrichtung (21), welche durch Wechselwirkung mit einem in den Statorabschnitten (12) erzeugten Magnetfeld eine zwischen der wenigstens einen Läuferbaugruppe (20) und der Statoranordnung (10) wirkende AntriebsBrems-Kraft erzeugt,
wobei die Statorabschnitte (12a) zur Versorgung mit elektrischer Energie von der Energiequelle (18a) in einer Paralleischalturigsanordnung angeordnet sind, und wobei die Erstrechungslänge der wenigstens einen Wechselwirkungsvorrichtung (21a) in der Anordungslänge richtung ein Vielfaches der Erstrechungslänge jedes Stationabschnitts (12a) in der Anordnungslängsrichtung (L) beträgt und wobei .
durch die Ansteuervorrichtung (40a) nur diejenigen Schaltervonichtungen (24a) in einen elektrische Energie zu den diesen zugeordneten' Statorabschnitten (12a) leitenden Zustand gebracht werden, deren zugeordnete Statorabschnitte (12a) sich in der Anordnungslängsrichtung (L) mit der wenigstens einen Wechseiwirkungsvorrichtung (21 a) der Läuferbaugruppe (20a) im wesentlichen vollständig überlappen.

9. Linearantriebssystem nach Anspruch 8, **dadurch gekennzeichnet, daß** die Erstreckungslänge der wenigstens einen Wechselwirkungsvorrichtung (21 a) in der Anordnungslängsrichtung (L), das Drei- bis Siebenfache der Erstreckungslänge jedes Statorabschnitts (12a) in der Anordnungslängsrichtung (L), beträgt.

10. Linearantriebssystem nach Anspruch 8 oder 9 **dadurch gekennzeichnet, daß** die Energiequelle (18a) eine Dreiphasen-Energiequelle (18a) ist und daß jede Schaltervorrichtung (24a) fürwenigstens zwei Phasen jeweils eine Schaltereinheit (84a, 86a) umfaßt, wobei jede der Schaltereinheiten (84a, 86a) jeder Schaltervorrichtung (24a) durch die Ansteuervorrichtung (40a) ansteuerbar ist.

11. Linearantriebssystem nach Anspruch 10, **dadurch gekennzeichnet, daß** jede Schaltereinheit (84a, 86a) ein Paar parallel geschalteter Thyristoren (88a, 90a) umfaßt, wobei jeder Thyristor (88a, 90a) eines Paars in seinem geschlossenen Schalterzustand in einer Stromflußrichtung leitend ist, welche der Stromflußrichtung des anderen Thyristors (88a, 90a) des Paars entgegengesetzt ist.

12. Linearantriebssystem nach Anspruch 10 oder 11, **dadurch gekennzeichnet, daß** jede Schaltervorrichtung (24a) für zwei Phasen jeweils eine Schaltereinheit (84a, 86a) umfaßt und daß bei der dritten Phase keine Schaltereinheit vorgesehen ist.

13. Linearantriebssystem nach einem der Ansprüche 8 bis 12, **dadurch gekennzeichnet, daß** der erste Schaltzustand ein geschlossener, leitender Schaltzustand ist und daß der zweite Schaltzustand ein offener, nicht leitender Schaltzustand ist.

14. Linearantriebssystem nach einem der Ansprüche 1 bis 13, ferner umfassend bei wenigstens einem, vorzugsweise allen Statoräbschnitten (12) eine Bremskraft-Erzeugungsschaltung (28, 30, 32).

15. Linearantriebssystem nach Anspruch 14, **dadurch gekennzeichnet, daß** die Bremskraft-Erzeugungsschaltung (28, 30, 32) in Parallelschaltung zum jeweils zugeordneten Statorabschnitt (12) eine Serienschaltung aus einer Bremsschaltervorrichtung (28), wenigstens einem Widerstand (30) und wenigstens einem Kondensator (32) umfaßt.

16. Linearantriebssystem nach Anspruch 15, **dadurch gekennzeichnet, daß** die Bremsschaltervorrichtung (28) eine normalerweise offene Sicherheitsschaltervorrichtung umfaßt, welche bei Unterschreiten eines Schwellenlaststroms und/oder einer Schwellenlastspannung in einen geschlossenen, leitenden Zustand schaltet.

17. Linearantriebssystem nach Anspruch 15 oder 16, **dadurch gekennzeichnet, daß** die Bremsschaltervorrichtung (28) durch die Ansteuervorrichtung (40) ansteuerbar ist.

18. Linearantriebssystem nach einem der Ansprüche 1 bis 17, ferner umfassend eine Positionserfassungseinrichtung (42; 42a) zum Erfassen einer Relativpositionierung der Läuferbaugruppe (20; 20a) bezüglich der Statoranordnung (10; 10a) und zum Erzeugen eines die Relativpositionierung wiedergebenden Positionssignals für die Ansteuervorrichtung (40; 40a), wobei die Ansteuervorrichtung (40; 40a) dazu ausgebildet ist, in Abhängigkeit von dem Positionssignal bestimmte der Statorabschnitte (12; 12a) zur Versorgung mit elektrischer Energie auszuwählen und die diesen ausgewählten Statorabschnitten (12; 12a) zugeordneten Schaltervorrichtungen (24; 24a) und gegebenenfalls Gruppenschaltervorrichtungen (34) in den ersten Schaltzustand zu stellen.

19. Linearantriebssystem nach einem der Ansprüche 1 bis 18, **dadurch gekennzeichnet, daß** die Energiequelle (18; 1 8a) einen Umrichter (18; 18a) umfaßt.

20. Verfahren zum Betreiben eines Linearantriebssystems, wobei das Linearantriebssystem umfaßt:
- eine Statoranordnung (10a) mit einer Mehrzahl von in einer Anordnungslängsrichtung (L) aufeinanderfolgenden Statorabschnitten (12a),
wobei jeder Statorabschnitt (12a) wenigstens eine Statorwicktung aufweist,
- eine Energiequelle (18a) zur Versorgung der Statorabschnitte (12a) mit elektrischer Energie,
- eine Schalteranordnung (26a) mit jeweils einer Schaltervorrichtung (24a) für jeden Statorabschnitt (12a), um in Abhängigkeit von einer Schaltstellung jeder der Schaftervonichtungen (24a) wahlweise elektrische Energie von der Energiequelle (18a) zu den den Schaltervorrichtungen (24a) jeweils zugeordneten Statorabschnitten (12a) zu leiten,
- eine Ansteuervorrichtung (40a) zum Ansteuern jeder Schaltervorrichtung (24a) der Schalteranordnung (26a), um zum Zuführen elektrischer Energie zu wenigstens einem ausgewählten Statorabschnitt (12a) die dem wenigstens einen ausgewählten Statorabschnitt (12a) zugeordnete Schaltervorrichtung (24a) in einen geschlossenen, leitenden Schaltzustand zu bringen oder/und in diesem zu halten, und die den nicht ausgewählten Statorabschnitten (12a) zugeordneten Schaltervorrichtungen (24a) in einen offenen, nicht leitenden Schaltzustand zu bringen oder/und in diesem zu halten,
wenigstens eine bezüglich der Statoranordnung (10a) in der Anordnungstängsrichtung (L) bewegbare Läuferbaugruppe (20a) mit wenigstens einer Wechselwirkungsvorrichtung (21a), welche durch Wechselwirkung mit einem in den Statorabschnitten (12a) erzeugten Magnetfeld eine zwischen der wenigstens einen Läuferbaugruppe (20a) und der Statoranordnung (10a) wirkende Antriebs/Brems-Kraft erzeugt,
- eine Positionserfassungseinrichtung (42a) zum Erfassen einer Relativpositionierung der Läuferbaugruppe (20a) bezüglich der Statoranordnung (10a),
- wobei die Statorabschnitte (12a) zur Versorgung mit der elektrischen Energie von der Energiequelle (18a) in einer
- Paralleischaftungsanordnung angeordnet sind und die Erstrechungslänge der wenigstens einen Wechselwirkungsvorrichtung in der Anordungslänge richtung ein Vielfaches der Erstrechungslänge jedes Stationabschnitts in der Anordungslängsrichtung beträgt und wobei von den Statorabschnitten (12a) diejenigen als ausgewählte Statorabschnitte (12a) mit Energie versorgt werden, welche sich in der Anordnungslängsrichtung (L) mit der wenigstens einen Wechselwirkungsvorrichtung (21 a) der Läuferbaugruppe (20a) im wesentlichen vollständig überlappen,
wobei das Verfahren die Schritte umfaßt:
a) Erfassen der Relativpositionierung der Läuferbaugruppe (20a) bezüglich der Statoranordnung (10a),
b) Ermitteln derjenigen Statorabschnitte (12a), welche der Läuferbaugruppe (20a) derart gegenüberliegen, daß die Statorabschnitte (12a) von der wenigstens einen Wechselwirkungsvorrichtung (21 a) der Läuferbaugruppe (20a) in der Anordnungslängsrichtung (L) im wesentlichen vollständig überlappt sind,
c) Auswählen der im Schritt b) ermittelten Statorabschnitte (12a) zur Versorgung mit Energie von der Energiequelle (18a),
wobei zumindest während einer Relativbewegung von Läuferbaugruppe (20a) und Statoranordnung (10a) die Schritte a) bis c) sukzessive wiederholt werden.

21. Linearantriebssystem nach einem der Ansprüche 1 bis 19, **dadurch gekennzeichnet, daß** die Schalteranordnung wenigstens einen Thyristor (90) umfaßt, welcher durch Zuführen eines Ansteuersignals von der Ansteuervorrichtung in einen geschlossenen, leitenden Zustand bringbar ist, und daß die Ansteuervorrichtung dem wenigstens einen Thyristor (90) zugeordnet eine Gleichstrom-Schließschaltsignalerzeugungsvorrichtung (92) umfaßt, um dem wenigstens einen Thyristor (90) im wesentlichen während der gesamten Zeitdauer, während welcher dieser im geschlossenen, leitenden Zustand zu halten ist, ein Gleichstrom-Schließschaltsignal zuzuführen.

22. Linearantriebssystem nach Anspruch 21, **dadurch gekennzeichnet, daß** die Gleichstrom-Schließschaltsignalerzeugungsvorrichtung (92) eine mit dem wenigstens einen Thyristor (90) über Schaltermittel (106) verbundene Gleichstromquelle (94, 96) umfaßt, wobei die Schaftermittel (106) durch Zufuhr eines Schaltsignals in einen geschlossenen, leitenden Zustand bringbar sind.

23. Linearantriebssystem nach Anspruch 22, **dadurch gekennzeichnet, daß** die Gleichstromquelle (94, 96) eine Batterie, einen Akkumulator, eine Wechselstromquelle (94) mit nachgeschaltetem Gleichrichter (96) oder dergleichen umfaßt.

24. Linearantriebssystem nach Anspruch 22 oder 23, **dadurch gekennzeichnet, daß** die Schaftermittel (106) direkt oder indirekt vermittels eines optischen Schaltsignals in den geschlossenen, leitenden Zustand bringbar sind.

25. Linearantriebssystem nach einem der Ansprüche 1 bis 19 oder nach einem der Ansprüche 22 bis 25, **dadurch gekennzeichnet, daß** die Schalteranordnung (26) wenigstens einen Thyristor (62, 64; 88a, 90a), umfaßt, und daß der Thyristor (62, 64; 88a, 90a) ein schneller Thyristor (62, 64; 88a, 90a) ist mit einer Freiwerdezeit im Bereich von 30 bis 80 %, vorzugsweise ca. 50 % des Impulsabstands von an den Thyristor (62, 64; 88a, 90a) angelegten Lastimpulsen.

26. Linearantriebssystem nach Anspruch 25, **dadurch gekennzeichnet, daß** die Freiwerdezeit des schnellen Thyristors (62, 64; 88a, 90a) im Bereich von 30 bis 100 µs liegt.

27. Linearantriebssystem nach Anspruch 25 oder 26, **dadurch gekennzeichnet, daß** der Impulsabstand der zeitliche Abstand zwischen zwei unmittelbar aufeinander folgenden Lastimpulsen gleicher Polarität ist.

28. Linearantriebssystem nach Anspruch 25 oder 26, **dadurch gekennzeichnet, daß** der impulsabstand der zeitliche Abstand zwischen zwei unmittelbar aufeinander folgenden Lastimpulsen unterschiedlicher Polarität ist.

29. Linearantriebssystem nach einem der Ansprüche 1 bis 19 oder nach einem der Ansprüche 21 bis 25, **dadurch gekennzeichnet, daß** die Schalteranordnung (26; 26a) wenigstens eine durch ein Ansteuersignal (S) von einer Ansteuervorrichtung (40; 40a) in einen geschlossenen Zustand bringbare Schaltervorrichtung (24; 24a), vorzugsweise Thyristorschaltervorrichtung, umfaßt, wobei bei das Linearantriebssystem dazu ausgebildet ist, zur Funktionsüberprüfung der Schalteranordnung die folgenden Schritte vorzunchmen :
a) Feststellen, ob ein Ansteuersignal zum Schalten der Schaltervorrichtung (24; 24a) in einen geschlossenen, leitenden Zustand an der Schaltervorrichtung (24; 24a) anliegt,
b) Feststellen, ob ein Spannungsabfall (V) über die Schaltervorrichtung (24; 24a) hinweg größer ist als eine vorbestimmte Schwellenspannung (Vs),
c) in Abhängigkeit von den Feststellungsergebnissen der Schritte a) und b) bestimmen, ob ein Fehler in derwenigstens einen Schaltervorrichtung (24; 24a) aufgetreten ist.

30. Linearantriebssystem nach Anspruch 29, **dadurch gekennzeichnet, daß** dann, wenn im Schritt a) festgestellt wird, daß kein Ansteuersignal (S) anliegt, und im Schritt b) festgestellt wird, daß der Spannungsabfall (V) größer als die Schwellenspannung (Vs) ist, bestimmt wird, daß kein Fehler der Schaltervorrichtung (24; 24a) vorliegt.

31. Linearantriebssystem nach Anspruch 29 oder 30, **dadurch gekennzeichnet, daß** dann, wenn im Schritt a) festgestellt wird, daß kein Ansteuersignal (s) anliegt, und im Schritt b) festgestellt wird, daß der Spannungsbfall (V) kleiner als die Schwellenspannung (Vs) ist, bestimmt wird, daß ein Fehler aufgetreten ist.

32. Linearantriebssystem 31, **dadurch gekennzeichnet, daß** vor der Bestimmung, daß ein Fehler in der Schaltervorrichtung (24; 24a) aufgetreten ist, abgewartet wird, bis der Ansteuersignalzustand sich zweimal geändert hat, und dann, wenn nach zweimaliger Änderung des Ansteuersignals der Spannungsabfall (V) immer noch kleiner als die Schwellenspannung (Vs) ist, bestimmt wird, daß ein Fehler aufgetreten ist.

33. Linearantriebssystem nach einem der Ansprüche 29 bis 32, **dadurch gekennzeichnet, daß** dann, wenn im Schritt a) bestimmt wird, daß ein Ansteuersignal (S) anliegt, und im Schritt b) bestimmt wird, daß der Spannungsabfall (V) kleiner als die Schwellenspannung (Vs) ist, bestimmt wird, daß kein Fehler in der Schaltervorrichtung (24; 24a) aufgetreten ist.

34. Linearantnebssystem nach einem der Ansprüche 29 bis 31, **dadurch gekennzeichnet, daß** dann, wenn im Schritt a) bestimmt wird, daß ein Ansteuersignal (S) anliegt und im Schritt b) bestimmt wird, daß der Spannungsabfall (V) größer als die Schwellenspannung (Vs) ist, bestimmt wird, daß ein Fehlerzustand aufgetreten ist.

35. Linearantriebssystem nach Anspruch 34, **dadurch gekennzeichnet, daß** vor der Bestimmung, daß ein Fehlerzustand aufgetreten ist, abgewartet wird, bis der Ansteuersignalzustand sich zweimal verändert hat, und dann, wenn nach zweimaliger Veränderung des Ansteuersignalzustands der Spannungsabfall (V) größer ist als die Schwellenspannung (Vs), bestimmt wird, daß ein Fehler aufgetreten ist.

36. Linearaniriebssystem nach einem der Ansprüche 29 bis 35, **dadurch gekennzeichnet, daß** die wenigstens eine Schaltervorrichtung (24; 24a) eine Mehrzahl zueinander parallel geschalteter Schaltereinheiten (56, 58, 60; 84a, 86a) umfaßt, vorzugsweise jeweils eine Schaltereinheit für jede Phase eines Dreiphasen-Energieversorgungssystems, und daß die Funktionsüberprüfung für jede Schaltereinheit (56, 58, 60; 84a, 86a) der wenigstens einen Schaltervorrichtug (24; 24a) durchgeführt wird.

37. Linearantriebssystem nach Anspruch 36, **dadurch gekennzeichnet, daß** dann, wenn die Funktionsüberprüfungen der verschiedenen Schaltereinheiten (56, 58, 60; 84a, 86a) der wenigstens einen Schaltervorrichtung (24; 24a) zu verschiedenen Ergebnissen führen, bestimmt wird, daß ein Fehler aufgetreten ist.

38. Linearantriebssystem nach einem der Ansprüche 29 bis 36, **dadurch gekennzeichnet, daß** die Funktionsüberprüfung wiederholt, vorzugsweise periodisch durchgeführt wird und daß nur dann bestimmt wird, daß bei der wenigstens einen Schaltervorrichtung (24; 24a) ein Fehler aufgetreten ist, wenn wenigstens zwei unmittelbar aufeinander folgende Funktionsüberprüfungen zu dem Ergebnis geführt haben, daß in der wenigstens einen Schaltervorrichtung ein Fehler aufgetreten ist.

## Claims

1. Linear drive system comprising
- a stator arrangement (10) with a plurality of stator sections (12) which are in succession in a longitudinal direction (L) of the arrangement, each stator section (12) having at least one stator winding,
- an energy source (18) for supplying the stator sections (12) with electrical energy,
- a switch arrangement (26) with a respective switching device (24) for each stator section (12) to selectively conduct electrical energy from the energy source (18) to the stator sections (12) respectively associated with the switching devices (24) as a function of a switch position of each of the switching devices (24),
- a controller (40) for controlling each switching device (24) of the switch arrangement (26) in order to bring the switching devices (24) associated with selected stator sections (12) into a first switching state and/or to hold them therein for supplying electrical energy to said selected stator sections, and to bring the switching devices (24) associated with the stator sections (12) not selected into a second switching state and/or to hold them therein,
- at least one rotor subassembly (20) movable with respect to the stator arrangement (10) in the longitudinal direction (L) of the arrangement and with at least one interacting device (21) which by interacting with a magnetic field generated in the stator sections (12) produces a driving/braking force acting between the at least one rotor subassembly (20) and the stator arrangement (10),
wherein to be supplied with electrical energy from the energy source (18) the stator sections (12) are arranged in a series circuit arrangement, and wherein the switching devices (24) are arranged in parallel in terms of circuitry with the respectively associated stator sections (12),
**characterised in that** the extension length of the at least one interacting device (21) in the longitudinal direction (L) of the arrangement is at least twice the extension length of any stator section (12) in the longitudinal direction (L) of the arrangement, the controller (40) being configured to bring into the first switching state those switching devices (24) of which the associated stator sections (12) overlap the at least one interacting device.

2. Linear drive system according to claim 1, **characterised in that** the stator sections (12) are divided into at least two stator section groups (36, 38), of which at least one stator section group (36, 38) comprises at least two stator sections (12), and **in that** the switching arrangement (26) also comprises a group switching device (34) associated with the at least one stator section group (36, 38) with two stator sections (12) and connected in parallel with the stator sections (12) of this stator section group (36, 38) arranged in series in terms of circuitry, and with the switching devices (24) associated with the stator sections (12) of this stator section group (36, 38), which group switching device (34) can be controlled by the controller (40).

3. Linear drive system according to either claim 1 or claim 2, **characterised in that** a circuit breaker arrangement (22) which can preferably be controlled by the controller (40) to interrupt the series connection between the two stator sections (12), is arranged between at least two stator sections (12).

4. Linear drive system according to claim 3, **characterised in that** a respective circuit breaker arrangement (22) is arranged between all adjacent stator sections (12).

5. Linear drive system according to any one of claims 1 to 4, **characterised in that** the energy source (18) is a three phase energy source (18), and **in that** the switching devices (24) and optionally the or every group switching device (34) comprises a switching unit (56, 58, 60) for each phase, the switching unit (56, 58, 60) of each switching device (24) or group switching device (34) being controllable by the controller (40).

6. Linear drive system according to claim 5, **characterised in that** each switching unit (56, 58, 60) comprises a pair of thyristors (62, 64) connected in parallel, each thyristor (62, 64) of a pair being conductive in its closed, conductive switching state in a current conduction direction opposed to the current conduction direction of the other thyristor (62, 64) of the pair.

7. Linear drive system according to any one of claims 1 to 6, **characterised in that** the first switching state is an open, non-conductive switching state, and **in that** the second switching state is a closed, conductive switching state.

8. Linear drive system comprising
- a stator arrangement (10) with a plurality of stator sections (12) which are in succession in a longitudinal direction (L) of the arrangement, each stator section (12) having at least one stator winding,
- an energy source (18) for supplying the stator sections (12) with electrical energy,
- a switch arrangement (26) with a respective switching device (24) for each stator section (12) to selectively conduct electrical energy from the energy source (18) to the stator sections (12) respectively associated with the switching devices (24) as a function of a switch position of each of the switching devices (24),
- a controller (40) for controlling each switching device (24) of the switch arrangement (26) in order to bring the switching device (24) associated with the at least one selected stator section (12) into a first switching state and/or to hold it therein for supplying electrical energy to at least one selected stator section, and to bring the switching devices (24) associated with the stator sections (12) not selected into a second switching state and/or to hold them therein,
- at least one rotor subassembly (20) movable with respect to the stator arrangement (10) in the longitudinal direction (L) of the arrangement and with at least one interacting device (21) which by interacting with a magnetic field generated in the stator sections (12) produces a driving/braking force acting between the at least one rotor subassembly (20) and the stator arrangement (10),
wherein to be supplied with electrical energy from the energy source (18) the stator sections (12) are arranged in a parallel circuit arrangement, and the extension length of the at least one interacting device (21 a) in the longitudinal direction of the arrangement being a multiple of the extension length of any stator section (12a) in the longitudinal direction (L) of the arrangement, and the controller (40) bringing only those switching devices (24a) of which the associated stator sections (12a) substantially completely overlap the at least one interacting device (21a) in the longitudinal direction (L) of the arrangement into a state conducting electrical energy to these associated stator sections (12a).

9. Linear drive system according to claim 8, **characterised in that** the extension length of the at least one interacting device (21a) in the longitudinal direction (L) of the arrangement is three to seven times the amount of the extension length of any stator section (12a) in the longitudinal direction (L) of the arrangement.

10. Linear drive system according to either claim 8 or claim 9, **characterised in that** the energy source (18a) is a three phase energy source (18a), and **in that** each switching device (24a) comprises a respective switching unit (84a, 86a) for at least two phases, wherein each of the switching units (84a, 86a) of each switching device (24a) can be controlled by the controller (40a).

11. Linear drive system according to claim 10, **characterised in that** each switching unit (84a, 86a) comprises a pair of thyristors (88a, 90a) connected in parallel, each thyristor (88a, 90a) of a pair being conductive in its closed switching state in a current flow direction opposed to the current flow direction of the other thyristor (88a, 90a) of the pair.

12. Linear drive system according to either claim 10 or claim 11, **characterised in that** each switching device (24a) comprises a respective switching unit (84a, 86a) for two phases, and **in that** no switching unit is provided in the third phase.

13. Linear drive system according to any one of claims 8 to 12, **characterised in that** the first switching state is a closed, conductive switching state, and **in that** the second switching state is an open, non-conductive switching state.

14. Linear drive system according to any one of claims 1 to 13, also comprising a braking force-generating circuit (28, 30, 32) in at least one, preferably all, stator sections (12).

15. Linear drive system according to claim 14, **characterised in that** the braking force-generating circuit (28, 30, 32) connected in parallel with the respectively associated stator section (12) comprises a series connection of a brake switching device (48), at least one resistor (30) and at least one capacitor (32).

16. Linear drive system according to claim 15, **characterised in that** the brake switching device (28) comprises a normally open safety switching device which switches into a closed, conductive state when a threshold load current and/or a threshold load voltage is/are not attained.

17. Linear drive system according to either claim 15 or claim 16, **characterised in that** the brake switching device (28) can be controlled by the controller (40).

18. Linear drive system according to any one of claims 1 to 17, also comprising a position detecting device (42; 42a) for detecting a relative positioning of the rotor subassembly (20; 20a) with respect to the stator arrangement (10; 10a) and for generating a position signal reproducing the relative positioning for the controller (40; 40a), wherein the controller (40; 40a) is designed to select certain stator sections (12; 12a) to be supplied with electrical energy as a function of the position signal, and to put the switching devices (24; 24a) associated with these selected stator sections (12; 12a) and optionally group switching devices (34) into the first switching state.

19. Linear drive system according to any one of claims 1 to 18, **characterised in that** the energy source (18; 18a) comprises a converter (18; 18a).

20. Method for operating a linear drive system, wherein the linear drive system comprises:
- a stator arrangement (10a) with a plurality of stator sections (12a) which are in succession in the longitudinal direction (L) of the arrangement, each stator section (12a) having at least one stator winding,
- an energy source (18a) for supplying the stator sections (12a) with electrical energy,
- a switch arrangement (26a) with a respective switching device (24a) for each stator section (12a) to selectively conduct electrical energy from the energy source (18a) to the stator sections (12a) respectively associated with the switching devices (24a) as a function of a switch position of each of the switching devices (24a),
- a controller (40a) for controlling each switching device (24a) of the switch arrangement (26a) in order to bring the switching device (24a) associated with the at least one selected stator section (12a) into a closed, conductive switching state and/or to hold it therein for supplying electrical energy to at least one selected stator section (12a), and to bring the switching devices (24a) associated with the stator sections (12a) not selected into an open, non-conductive switching state and/or to hold them therein,
- at least one rotor subassembly (20a) which is movable with respect to the stator arrangement (10a) in the longitudinal direction (L) of the arrangement and comprises at least one interacting device (21a) which, by interacting with a magnetic field generated in the stator sections (12a), produces a driving/braking force acting between the at least one rotor subassembly (20a) and the stator arrangement (10a),
- a position detecting device (42a) for detecting the relative positioning of the rotor subassembly (20a) with respect to the stator arrangement (10a),
- wherein to be supplied with the electrical energy from the energy source (18a) the stator sections (12a) are arranged in a parallel circuit arrangement and the extension length of the at least one interacting device in the longitudinal direction of the arrangement is a multiple of the extension length of any stator section in the longitudinal direction of the arrangement, and wherein those of the stator sections (12a) which substantially completely overlap the at least one interacting device (21 a) of the rotor subassembly (20a) in the longitudinal direction (L) of the arrangement are supplied with energy as the selected stator sections (12a),
- wherein the method comprises the steps:
a) detecting the relative positioning of the rotor subassembly (20a) with respect to the stator arrangement (10a),
b) ascertaining those stator sections (12a) opposing the rotor subassembly (20a) in such a way that the stator sections (12a) are overlapped substantially completely by the at least one interacting device (21a) of the rotor subassembly (20a) in the longitudinal direction (L) of the arrangement,
c) selecting the stator sections (12a) ascertained in step b) to be supplied with energy from the energy source (18a),
wherein at least during a relative movement of rotor subassembly (20a) and stator arrangement (10a) the steps a) to c) are repeated in succession.

21. Linear drive system according to any one of claims 1 to 19, **characterised in that** the switching arrangement comprises at least one thyristor (90) which can be brought into a closed, conductive state by supplying a control signal from the controller, and **in that** the controller comprises a d.c. closing switching signal generator (92) associated with the at least one thyristor (90), to supply the at least one thyristor (90) with a d.c. closing switching signal substantially for the entire period during which it is to be held in the closed, conductive state.

22. Linear drive system according to claim 21, **characterised in that** the d.c. closing switching signal generator (92) comprises a d.c. source (94, 96) connected to the at least one thyristor (90) via switching means (106), wherein the switching means (106) can be brought into a closed, conductive state by supplying a switching signal.

23. Linear drive system according to claim 22, **characterised in that** the d.c. source (94, 96) comprises a battery, an accumulator, an alternating current source (94) with rectifier (96) connected downstream or the like.

24. Linear drive system according to either claim 22 or claim 23, **characterised in that** the switching means (106) can be brought directly or indirectly into the closed, conductive state by means of an optical switching signal.

25. Linear drive system according to any one of claims 1 to 19 or according to any one of claims 22 to 25, **characterised in that** the switching arrangement (26) comprises at least one thyristor (62, 64; 88a, 90a) and **in that** the thyristor (62, 64; 88a, 90a) is a quick thyristor (62, 64; 88a, 90a) with a circuit-commutated recovery time in the range of 30 to 80%, preferably approximately 50% of the interpulse period of load pulses applied to the thyristor (62, 64; 88a, 90a).

26. Linear drive system according to claim 25, **characterised in that** the circuit-commutated recovery time of the quick thyristor (62, 64; 88a, 90a) is in the range of 30 to 100 µs.

27. Linear drive system according to either claim 25 or claim 26, **characterised in that** the interpulse period is the interval between two directly successive load pulses of identical polarity.

28. Linear drive system according to either claim 25 or claim 26, **characterised in that** the interpulse period is the interval between two directly successive load pulses of different polarity.

29. Linear drive system according to any one of claims 1 to 19 or according to any one of claims 21 to 28, **characterised in that** the switching arrangement (26; 26a) comprises at least one switching device (24; 24a), preferably a thyristor switching device, which can be brought into a closed state by a control signal (S) from a controller (40; 40a), the linear drive system being designed to carry out the following steps for checking the operation of the switching arrangement:
a) establishing whether a control signal for switching the switching device (24; 24a) into a closed, conductive state is present at the switching device (24; 24a),
b) establishing whether a drop in voltage (V) over the switching device (24; 24a) is greater than a predetermined threshold voltage (Vs),
c) determining, as a function of the results of steps a) and b), whether a fault has occurred in the at least one switching device (24; 24a).

30. Linear drive system according to claim 29, **characterised in that** if it is established in step a) that there is no control signal (S) and in step b) that the drop in voltage (V) is greater than the threshold voltage (Vs), it is ascertained that there is no fault in the switching device (24; 24a).

31. Linear drive system according to either claim 29 or claim 30, **characterised in that** if it is established in step a) that there is no control signal (S) and in step b) that the drop in voltage (V) is smaller than the threshold voltage (Vs), it is ascertained that a fault has occurred.

32. Linear drive system according to claim 31, **characterised in that** a fault in the switching device (24; 24a) is not ascertained until the control signal state has changed twice and then if after two changes in the control signal the drop in voltage (V) is still smaller than the threshold voltage (Vs) it is ascertained that a fault has occurred.

33. Linear drive system according to any one of claims 29 to 32, **characterised in that** if it is ascertained in step a) that there is a control signal (S) and in step b) that the drop in voltage (V) is smaller than the threshold voltage (Vs), it is ascertained that no fault has occurred in the switching device (24; 24a).

34. Linear drive system according to any one of claims 29 to 31, **characterised in that** if it is ascertained in step a) that there is a control signal (S) and in step b) that the drop in voltage (V) is greater than the threshold voltage (Vs), it is ascertained that a fault state has occurred.

35. Linear drive system according to claim 34, **characterised in that** a fault state is not ascertained until the control signal state has changed twice, and then if after two changes in the control signal state the drop in voltage (V) is greater than the threshold voltage (Vs) it is ascertained that a fault has occurred.

36. Linear drive system according to any one of claims 29 to 35, **characterised in that** the at least one switching device (24; 24a) comprises a plurality of switching units (56, 58, 60; 84a, 86a) connected in parallel with one another, preferably one respective switching unit for each phase of a three phase energy supply system, and **in that** the check of operation is carried out for each switching unit (56, 58, 60; 84a, 86a) of the at least switching device (24; 24a).

37. Linear drive system according to claim 36, **characterised in that** if the check of operations of the various switching units (56, 58, 60; 84a, 86a) of the at least one switching device (24; 24a) leads to different results it is ascertained that a fault has occurred.

38. Linear drive system according to any one of claims 29 to 36, **characterised in that** the check of operation is repeated, preferably carried out periodically, and **in that** it is only ascertained that a fault has occurred in the at least one switching device (24; 24a) if at least two directly successive checks of operation have led to the result that an error has occurred in the at least one switching device.

## Revendications

1. Système d'entraînement linéaire comprenant:
- un agencement de stator (10) comportant une pluralité de tronçons de stator (12) se succédant dans une direction longitudinale (L) de l'agencement, chaque tronçon de stator (12) comportant au moins un enroulement de stator,
- une source d'énergie (18) pour l'alimentation des tronçons de stator (12) en énergie électrique,
- un agencement de commutateurs (26) comportant chacun un dispositif à commutateur (24) pour chaque tronçon de stator (12), afin de conduire l'énergie électrique, en fonction d'une position de commutation de chacun des dispositifs à commutateur (24), au choix, de la source d'énergie (18) vers les tronçons de stator (12) associés respectivement aux dispositifs à commutateur (24),
- un dispositif de commande (40) pour commander chaque dispositif à commutateur (24) de l'agencement de commutateurs (26), afin, dans le but d'acheminer l'énergie électrique vers des tronçons de stator (12) sélectionnés, d'amener le dispositif à commutateur (24), associé à ceux-ci, dans un premier état de commutation et/ou de le maintenir dans cet état, et d'amener les dispositifs à commutateur (24), associés aux tronçons de stator (12) non sélectionnés, dans un deuxième état de commutation et/ou les maintenir dans cet état,
- au moins un groupe curseur (20) déplaçable par rapport à l'agencement de stator (10) dans la direction longitudinale (L) de l'agencement, avec au moins un dispositif à interaction (21) qui, par interaction avec un champ magnétique produit dans les tronçons de stator (12), produit une force d'entraînement/freinage agissant entre le ou les groupe(s) curseur(s) (20) et l'agencement de stator (10),
les tronçons de stator (12) étant disposés, pour l'alimentation en énergie électrique par la source d'énergie (18), suivant un montage en série et les dispositifs à commutateur (24) étant disposés suivant un montage en parallèle par rapport aux tronçons de stator (12) respectivement associés,
**caractérisé en ce que**
la longueur de l'étendue d'au moins un dispositif d'interaction (21) dans la direction longitudinale (L) de l'agencement est égale au moins au double de la longueur de l'étendue de chaque tronçon de stator (12) dans la direction longitudinale (L) de l'agencement, le dispositif de commande (40) étant conçu pour amener dans le premier état de commutation les dispositifs à commutateur (24) dont les tronçons de stator (12) associés recouvrent au moins un dispositif à interaction.

2. Système d'entraînement linéaire selon la revendication 1, **caractérisé en ce que** les tronçons de stator (12) sont répartis en au moins deux groupes de tronçons de stator (36, 38), dont au moins un groupe de tronçons de stator (36, 38) comprend au moins deux tronçons de stator (12) et **en ce que** l'agencement de commutateurs (26) comprend en outre un dispositif à commutateur de groupe (34), qui peut être commandé par le dispositif de commande (40), qui est associé à un ou à l'un des groupes de tronçons de stator (36, 38) avec deux tronçons de stator (12), et qui est monté en parallèle aux tronçons de stator (12), mis en circuit en série, de ce groupe de tronçons de stator (36, 38), et aux dispositifs à commutateur (24) associés aux tronçons de stator (12) de ce groupe de tronçons de stator (36, 38).

3. Système d'entraînement linéaire selon la revendication 1 ou 2, **caractérisé en ce qu'**entre au moins deux tronçons de stator (12) est disposé un dispositif à interrupteur de protection (22) qui peut être commandé de préférence par le dispositif de commande (40) pour interrompre la liaison série entre les deux tronçons de stator (12).

4. Système d'entraînement linéaire selon la revendication 3, **caractérisé en ce qu'**un dispositif à interrupteur de protection (22) est disposé à chaque fois entre tous les tronçons de stator (12) adjacents les uns aux autres.

5. Système d'entraînement linéaire selon l'une des revendications 1 à 4, **caractérisé en ce que** la source d'énergie (18) est une source d'énergie triphasée (18) et **en ce que** les dispositifs à commutateur (24) et éventuellement le ou chaque dispositif à commutateur de groupe (34) comprend pour chaque phase une unité de commutateur (56, 58, 60), l'unité de commutateur (56, 58, 60) de chaque dispositif à commutateur (24) ou du dispositif à commutateur de groupe (34) pouvant être commandée par le dispositif de commande (40).

6. Système d'entraînement linéaire selon la revendication 5, **caractérisé en ce que** chaque unité de commutateur (56, 58, 60) comprend une paire de thyristors (62, 64) montés en parallèle, chaque thyristor (62, 64) d'une paire étant conducteur, dans son état fermé de commutateur conducteur, dans un sens d'écoulement du courant qui est opposé au sens d'écoulement du courant de l'autre thyristor (62, 64) de la paire.

7. Système d'entraînement linéaire selon l'une des revendications 1 à 6, **caractérisé en ce que** le premier état de commutation est un état de commutation ouvert, non conducteur, et **en ce que** le deuxième état de commutation est un état de commutation conducteur, fermé.

8. Système d'entraînement linéaire comprenant:
- un agencement de stator (10) comportant une pluralité de tronçons de stator (12) se succédant dans une direction longitudinale (L) de l'agencement, chaque tronçon de stator (12) comportant au moins un enroulement de stator,
- une source d'énergie (18) pour l'alimentation des tronçons de stator (12) en énergie électrique,
- un agencement de commutateurs (26) comportant chacun un dispositif à commutateur (24) pour chaque tronçon de stator (12), afin de conduire l'énergie électrique, en fonction d'une position de commutation de chacun des dispositifs à commutateur (24), au choix, de la source d'énergie (18) vers les tronçons de stator (12) associés respectivement aux dispositifs à commutateur (24),
- un dispositif de commande (40) pour commander chaque dispositif à commutateur (24) de l'agencement de commutateurs (26), afin, dans le but d'acheminer l'énergie électrique vers au moins un tronçon de stator (12) sélectionné, d'amener le dispositif à commutateur (24), associé au tronçon de stator (12) sélectionné, au nombre minimum d'un, dans un premier état de commutation et/ou de le maintenir dans cet état, et d'amener les dispositifs à commutateur (24), associés aux tronçons de stator (12) non sélectionnés, dans un deuxième état de commutation et/ou les maintenir dans cet état,
- au moins un groupe curseur (20) déplaçable par rapport à l'agencement de stator (10) dans la direction longitudinale (L) de l'agencement, avec au moins un dispositif à interaction (21) qui, par interaction avec un champ magnétique produit dans les tronçons de stator (12), produit une force d'entraînement/freinage agissant entre le groupe curseur (20), au nombre minimum d'un, et l'agencement de stator (10),
les tronçons de stator (12a) étant disposés, pour l'alimentation en énergie électrique par la source d'énergie (18a), suivant un montage en parallèle et la longueur de l'étendue d'au moins un dispositif d'interaction (21 a) dans la direction longitudinale (L) de l'agencement étant un multiple de la longueur de l'étendue de chaque tronçon de stator (12a) dans la direction longitudinale (L) de l'agencement, et
seuls les dispositifs à commutateur (24a) étant amenés, par le dispositif de commande (40a), à passer dans un état conduisant l'énergie électrique aux tronçons de stator (12) qui leur sont associés, dont les tronçons de stator (12a) associés recouvrent sensiblement complètement, dans la direction longitudinale (L) de l'agencement, un dispositif à interaction (21 a), au nombre minimum d'un, du groupe curseur (20a).

9. Système d'entraînement linéaire selon la revendication 8, **caractérisé en ce que** la longueur de l'étendue d'au moins un dispositif à interaction (21 a), dans la direction longitudinale (L) de l'agencement, correspond à trois fois à sept fois la longueur de l'étendue de chaque tronçon de stator (12a) dans la direction longitudinale (L) de l'agencement.

10. Système d'entraînement linéaire selon la revendication 8 ou 9, **caractérisé en ce que** la source d'énergie (18a) est une source d'énergie triphasée (18a) et **en ce que** chaque dispositif à commutateur (24a) comprend une unité de commutateur (84a, 86a) pour au moins deux phases, chacune des unités des commutateur (84a, 86a) de chaque dispositif à commutateur (24a) pouvant être commandée par le dispositif de commande (40a).

11. Système d'entraînement linéaire selon la revendication 10, **caractérisé en ce que** chaque unité de commutateur (84a, 86a) comprend une paire de thyristors (88a, 90a) montés en parallèle, chaque thyristor (88a, 90a) d'une paire étant conducteur dans son état fermé de commutateur, dans un sens d'écoulement du courant qui est opposé au sens d'écoulement du courant de l'autre thyristor (88a, 90a) de la paire.

12. Système d'entraînement linéaire selon la revendication 10 ou 11, **caractérisé en ce que** chaque dispositif à commutateur (24a) comprend pour chacune de deux phases une unité de commutateur (84a, 86a) et **en ce qu'**aucune unité de commutateur n'est prévue pour la troisième phase.

13. Système d'entraînement linéaire selon l'une des revendications 8 à 12, **caractérisé en ce que** le premier état de commutation est un état fermé de commutateur conducteur et **en ce que** le deuxième état de commutation est un état ouvert de commutateur non conducteur.

14. Système d'entraînement linéaire selon l'une des revendications 1 à 13, comprenant en outre, pour au moins un, de préférence tous les tronçons de stator (12), un circuit de production d'une force de freinage (28, 30, 32).

15. Système d'entraînement linéaire selon la revendication 14, **caractérisé en ce que** le circuit de production d'une force de freinage (28, 30, 32) comprend, dans un montage en parallèle aux tronçons de stator (12) associés, un montage série constitué d'un dispositif à interrupteur de freinage (28), d'au moins une résistance (30) et d'au moins un condensateur (32).

16. Système d'entraînement linéaire selon la revendication 15, **caractérisé en ce que** le dispositif à interrupteur de freinage (28) comprend un dispositif à interrupteur de sécurité normalement ouvert, qui passe dans un état fermé conducteur en cas de sous-dépassement d'un courant de charge seuil et/ou d'une tension de charge seuil.

17. Système d'entraînement linéaire selon la revendication 15 ou 16, **caractérisé en ce que** le dispositif à interrupteur de freinage (28) peut être commandé par le dispositif de commande (40).

18. Système d'entraînement linéaire selon l'une des revendications 1 à 17, comprenant en outre un dispositif de détection de position (42 ; 42a) pour détecter un positionnement relatif du groupe curseur (20 ; 20a) par rapport à l'agencement de stator (10 ; 10a) et pour produire un signal de position, traduisant le positionnement relatif, pour le dispositif de commande (40 ; 40a), ce dispositif de commande (40 ; 40a) étant conçu pour sélectionner, en fonction du signal de position, certains des tronçons de stator.(12 ; 12a) en vue de l'alimentation en énergie électrique, et pour amener dans le premier état de commutation les dispositifs à commutateur (24 ; 24a) associés à ces tronçons de stator (12 ; 1 2a) sélectionnés, et éventuellement des dispositifs à commutateur de groupe (34).

19. Système d'entraînement linéaire selon l'une des revendications 1 à 18, **caractérisé en ce que** la source d'énergie (18; 18a) comprend un dévolteur-survolteur(18; 1 8a).

20. Procédé d'exploitation d'un système d'entraînement linéaire, le système d'entraînement linéaire comprenant :
- un agencement de stator (10a) comportant une pluralité de tronçons de stator (12a) se succédant dans une direction longitudinale (L) de l'agencement, chaque tronçon de stator (12a) comportant au moins un enroulement de stator,
- une source d'énergie (18a) pour l'alimentation des tronçons de stator (12a) en énergie électrique,
- un agencement de commutateurs (26a) comportant chacun un dispositif à commutateur (24a) pour chaque tronçon de stator (12a), afin de conduire l'énergie électrique, en fonction d'une position de commutation de chacun des dispositifs à commutateur (24a), au choix, de la source d'énergie (18a) vers les tronçons de stator (12a) associés respectivement aux dispositifs à commutateur (24a),
- un dispositif de commande (40a) pour commander chaque dispositif à commutateur (24a) de l'agencement de commutateurs (26a), pour amener le dispositif à commutateur (24a), associé à au moins un tronçon de stator (12a) sélectionné, dans un premier état de commutation fermé, conducteur et/ou de le maintenir dans cet état, et amener les dispositifs à commutateur (24a) associés aux tronçons de stator (12a) non sélectionnés dans un deuxième état de commutation ouvert, non conducteur et/ou les maintenir dans cet état, dans le but d'acheminer l'énergie électrique vers au moins un tronçon de stator (12a) sélectionné,
- au moins un groupe curseur (20a) déplacable par rapport à l'agencement de stator (10a) dans la direction longitudinale (L) de l'agencement, avec au moins un dispositif à interaction (21 a) qui, par interaction avec un champ magnétique produit dans les tronçons de stator (12a), produit une force d'entraînement/freinage agissant entre le ou les groupe(s) curseur(s) (20a) et l'agencement de stator (10a),
- un dispositif de détection de position (42a) pour détecter un positionnement relatif du groupe curseur (20a) par rapport à l'agencement de stator (10a),
- les tronçons de stator (12a) étant disposés, pour l'alimentation en énergie électrique depuis la source d'énergie (18a), suivant un montage parallèle, et la longueur de l'étendue d'au moins un dispositif d'interaction dans la direction longitudinale de l'agencement étant un multiple de la longueur de l'étendue de chaque tronçon de stator dans la direction longitudinale de l'agencement,
et, parmi les tronçons de stator (12a), les tronçons de stator (12a) sélectionnés qui recouvrent sensiblement entièrement, dans la direction longitudinale (L) de l'agencement, au moins un dispositif à interaction (21 a) du groupe curseur (20a), étant alimentés en énergie,
le procédé comprenant les étapes suivantes :
a) détection du positionnement relatif du groupe curseur (20a) par rapport à l'agencement de stator (10a),
b) détermination des tronçons de stator (12a) qui font face au groupe curseur (20a) de manière que les tronçons de stator (12a) d'au moins un dispositif à interaction (21a) du groupe curseur (20a) soient sensiblement entièrement recouverts dans la direction longitudinale (L) de l'agencement,
c) sélection des tronçons de stator (12a) déterminés à l'étape b) pour l'alimentation en énergie depuis la source d'énergie (18a),
les étapes a) à c) étant répétées successivement au moins pendant un mouvement relatif du groupe curseur (20a) et de l'agencement de stator (10a).

21. Système d'entraînement linéaire selon l'une des revendications 1 à 19, **caractérisé en ce que** l'agencement de commutateurs comprend au moins un thyristor (90) qui peut être amené en un état fermé conducteur, par application d'un signal de commande depuis le dispositif de commande, et **en ce que** le dispositif de commande comprend un dispositif de production d'un signal de fermeture à courant continu (92), associé au ou aux thyristor(s) (90), afin d'amener un signal de fermeture à courant continu au ou aux thyristor(s) (90), sensiblement pendant toute la durée pendant laquelle celui-ci doit être maintenu à l'état fermé conducteur.

22. Système d'entraînement linéaire selon la revendication 21, **caractérisé en ce que** le dispositif de production de signal de fermeture à courant continu (92) comprend une source de courant continu (94, 96) reliée au ou aux thyristor(s) (90), par des moyens à commutateur (106), les moyens à commutateur (106) pouvant être amenés dans un état conducteur fermé, par application d'un signal de commutation.

23. Système d'entraînement linéaire selon la revendication 22, **caractérisé en ce que** la source de courant continu (94, 96) comprend une batterie, un accumulateur, une source de courant alternatif (94) avec redresseur (96) monté en aval, ou similaire.

24. Système d'entraînement linéaire selon la revendication 22 ou 23, **caractérisé en ce que** les moyens à commutateur (106) peuvent être amenés dans l'état fermé conducteur, directement ou indirectement au moyen d'un signal de commutation optique.

25. Système d'entraînement linéaire selon l'une des revendications 1 à 19 ou selon l'une des revendications 22 à 25, **caractérisé en ce que** l'agencement de commutateurs (26) comprend au moins un thyristor (62, 64 ; 88a, 90a) et **en ce que** le thyristor (62, 64; 88a, 90a) est un thyristor rapide (62, 64; 88a, 90a) avec un temps de recouvrement compris entre 30 et 80 %, de préférence d'environ 50 % de l'intervalle entre les impulsions de charge appliquées au thyristor (62, 64, 88a, 90a).

26. Système d'entraînement linéaire selon la revendication 25, **caractérisé en ce que** le temps de recouvrement du thyristor rapide (62, 64; 88a, 90a) se situe entre 30 et 100 µs.

27. Système d'entraînement linéaire selon la revendication 25 ou 26, **caractérisé en ce que** l'intervalle entre impulsions est l'intervalle de temps qui s'écoule entre deux impulsions de charge de même polarité se succédant directement.

28. Système d'entraînement linéaire selon la revendication 25 ou 26, **caractérisé en ce que** l'intervalle entre impulsions est l'intervalle de temps qui s'écoule entre deux impulsions de charge de polarités différentes se succédant directement.

29. Système d'entraînement linéaire selon l'une des revendications 1 à 19, ou selon l'une des revendications 21 à 25, **caractérisé en ce que** l'agencement de commutateurs (26; 26a) comprend au moins un dispositif à commutateur (24 ; 24a), de préférence un dispositif à commutateur à thyristor, qui peut être amené par un signal de commande (S) d'un dispositif de commande (40; 40a) dans un état fermé, le système d'entraînement linéaire étant conçu, afin de vérifier le bon fonctionnement de l'agencement de commutateurs, pour procéder aux étapes suivantes :
a) constater si un signal de commande s'applique au dispositif à commutateur (24; 24a), pour faire passer le dispositif à commutateur (24 ; 24a) dans un état fermé conducteur,
b) constater si une chute de tension (V), à travers le dispositif à commutateur (24 ; 24a) est supérieure à une tension seuil (Vs) prédéterminée,
c) déterminer en fonction des résultats du constat des étapes a) et b), si un défaut est intervenu dans au moins un dispositif à commutateur (24 ; 24a).

30. Système d'entraînement linéaire selon la revendication 29, **caractérisé en ce que**, lorsqu'il est constaté à l'étape a), qu'aucun signal de commande (S) ne s'applique, et à l'étape b) que la chute de tension (V) est supérieure à la tension seuil (Vs), il est déterminé que l'on n'est pas en présence d'un défaut du dispositif à commutateur (24 ; 24a).

31. Système d'entraînement linéaire selon la revendication 29 ou 30, **caractérisé en ce que** s'il est constaté au cours de l'étape a) qu'aucun signal de commande (S) ne s'applique, et au cours de l'étape b) que la chute de tension (V) est inférieure à la tension seuil (Vs), il est déterminé qu'un défaut est intervenu.

32. Système d'entraînement linéaire selon la revendication 31, **caractérisé en ce qu'**avant de déterminer qu'un défaut est intervenu dans le dispositif à commutateur (24; 24a), on attend que l'état du signal de commande se soit modifié deux fois, puis, après la deuxième modification du signal de commande, si la chute de tension (V) est toujours inférieure à la tension seuil (Vs), il est déterminé qu'un défaut est apparu.

33. Système d'entraînement linéaire selon l'une des revendications 29 à 32, **caractérisé en ce que** s'il est déterminé au cours de l'étape a) qu'un signal de commande (S) s'applique, et au cours de l'étape b) que la chute de tension (V) est inférieure à la tension seuil (Vs), il est déterminé qu'aucun défaut n'est apparu dans le dispositif à commutateur (24 ; 24a).

34. Système d'entraînement linéaire selon l'une des revendications 29 à 31, **caractérisé en ce que** s'il est déterminé au cours de l'étape a) qu'un signal de commande (S) s'applique et qu'au cours de l'étape b) que la chute de tension (V) est supérieure à la tension seuil (Vs), il est déterminé qu'un état de défaut est apparu.

35. Système d'entraînement linéaire selon la revendication 34, **caractérisé en ce qu'**avant de déterminer qu'un état de défaut est apparu, on attend que l'état du signal de commande se soit modifié deux fois, puis, si après la deuxième modification de l'état du signal de commande, la chute de tension (V) est supérieure à la tension seuil (Vs), il est déterminé qu'un défaut est apparu.

36. Système d'entraînement linéaire selon l'une des revendications 29 à 35, **caractérisé en ce que** le ou les dispositif(s) à commutateur (24; 24a) comprennent une pluralité d'unités de commutateur (56, 58, 60 ; 84a, 86a) montées en parallèle les unes aux autres, de préférence à chaque fois une unité de commutateur pour chaque phase d'un système triphasé d'alimentation en énergie, et **en ce que** la vérification du bon fonctionnement est exécutée pour chaque unité de commutateur (56, 58, 60 ; 84a, 86a) du ou des dispositifs à commutateur (24 ; 24a).

37. Système d'entraînement linéaire selon la revendication 36, **caractérisé en ce que** lorsque les vérifications du bon fonctionnement des différentes unités de commutateur (56, 58, 60; 84a, 86a) du ou des dispositifs à commutateur (24; 24a) conduisent à des résultats différents, il est déterminé qu'un défaut est apparu.

38. Système d'entraînement linéaire selon l'une des revendications 29 à 36, **caractérisé en ce que** la vérification du bon fonctionnement est renouvelée, de préférence périodiquement, et **en ce qu'**il n'est déterminé qu'un défaut est apparu dans le ou les dispositif(s) à commutateur (24 ; 24a), que si au moins deux vérifications immédiatement successives du bon fonctionnement ont conduit au résultat selon lequel un défaut est apparu dans le ou les dispositifs à commutateur.
